# EUROPEAN PATENT APPLICATION

(11) **EP 4 790 913 A1**
(43) Date of publication of application: **12.08.2026**
(21) Application number: 24875002.8
(22) Date of filing: 04.10.2024
(51) Int. Cl.: H04B 7/06, H04B 7/0408, H04B 7/0413, H04W 64/00, G01S 13/00, G01S 13/88, G01S 7/40, H04W 24/08

(54) **METHOD AND DEVICE FOR DETERMINING TRANSMISSION POWER IN INTEGRATED SENSING AND COMMUNICATION (ISAC) TECHNOLOGY**

(30) Priority: 05.10.2023 US 202363542765 P; 20.10.2023 KR 20230141360
(71) Applicant: LG Electronics Inc., Yeongdeungpo-gu Seoul 07336 (KR)
(72) Inventor: BYUN, Jaihyun, Seoul 06772 (KR); KO, Woosuk, Seoul 06772 (KR); SEO, Hanbyul, Seoul 06772 (KR); LEE, Seungmin, Seoul 06772 (KR)
(74) Representative: Jung, Minkyu
(86) International application number: PCT/KR2024/015130
(87) International publication number: WO 2025/075447

(57) **Abstract**

Provided are a method for performing wireless communication and sensing by a first device, and a device supporting same. The first device may: acquire information related to a sensing area; determine transmission power for transmitting a sensing signal, on the basis of a maximum distance between the first device and the sensing area; and transmit the sensing signal on the basis of the transmission power. For example, a target object within the sensing area may be detected on the basis of the sensing signal.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method may be provided. For example, the method may include: obtaining information related to a sensing area; determining transmission power for transmission of a sensing signal, based on a maximum distance between a first device and the sensing area; and transmitting the sensing signal based on the transmission power. For example, a target object within the sensing area may be detected based on the sensing signal.

According to an embodiment of the present disclosure, a device may be provided. For example, the device may include at least one transceiver; at least one processor; and at least one memory connected to the at least one processor and storing instructions that, based on being executed by the at least one processor, may cause the device to operations comprising: obtaining information related to a sensing area; determining transmission power for transmission of a sensing signal, based on a maximum distance between a first device and the sensing area; and transmitting the sensing signal based on the transmission power. For example, a target object within the sensing area may be detected based on the sensing signal.

According to an embodiment of the present disclosure, a processing device configured to control a device may be provided. The processing device may include at least one processor; and at least one memory connected to the at least one processor and storing instructions that, based on being executed by the at least one processor, may cause the device to operations comprising: obtaining information related to a sensing area; determining transmission power for transmission of a sensing signal, based on a maximum distance between a first device and the sensing area; and transmitting the sensing signal based on the transmission power. For example, a target object within the sensing area may be detected based on the sensing signal.

According to an embodiment of the present disclosure, a non-transitory computer-readable storage medium storing instructions, may be provided. The instructions, when executed, cause a device to perform operations comprising: obtaining information related to a sensing area; determining transmission power for transmission of a sensing signal, based on a maximum distance between a first device and the sensing area; and transmitting the sensing signal based on the transmission power. For example, a target object within the sensing area may be detected based on the sensing signal.

### BRIEF DESCRIPTION OF THE DRAWINGS

FIG. 1 shows a communication procedure between devices based on an embodiment of the present disclosure.
FIG. 2 shows a radio protocol architecture, based on an embodiment of the present disclosure.
FIG. 3 shows a structure of a radio frame, based on an embodiment of the present disclosure.
FIG. 4 shows a slot structure of a frame, based on an embodiment of the present disclosure.
FIG. 5 shows an example of a BWP, based on an embodiment of the present disclosure.
FIG. 6 shows a communication structure providable in a 6G system, based on an embodiment of the present disclosure.
FIG. 7 shows an example of a communication scenario based on a 6G system, based on an embodiment of the present disclosure.
FIG. 8 shows beam management based on an embodiment of the present disclosure.
FIG. 9 illustrates an example of a sensing operation according to an embodiment of the present disclosure.
FIG. 10 illustrates a relationship among RCS, distance (D), and power according to an embodiment of the present disclosure.
FIG. 11 illustrates mono-static ((a) of FIG. 11) sensing and bi-static ((b) of FIG. 11) sensing in ISAC technology according to an embodiment of the present disclosure.
FIG. 12 illustrates a method for selecting an RoI by using information of a receiver according to an embodiment of the present disclosure.
FIG. 13 illustrates a method in which a transmitter transmits an RoI to a receiver according to an embodiment of the present disclosure.
FIG. 14 illustrates a method in which a third device selects an RoI and transmits the RoI to a transmitter and/or a receiver according to an embodiment of the present disclosure.
FIG. 15 illustrates a method in which a transmitter selects and transmits an RoI according to an embodiment of the present disclosure.
FIG. 16 illustrates a method in which a receiver selects and transmits an RoI according to an embodiment of the present disclosure.
FIG. 17 illustrates a method in which a third device selects and transmits an RoI according to an embodiment of the present disclosure.
FIG. 18 illustrates a method of information exchange between a transmitter, a receiver, and/or a third device according to an embodiment of the present disclosure.
FIG. 19 illustrates a case in which a sensing signal is transmitted with excessive transmit signal strength according to an embodiment of the present disclosure.
FIG. 20 illustrates a case in which a sensing signal is transmitted with insufficient transmit signal strength according to an embodiment of the present disclosure.
FIG. 21 illustrates the maximum and minimum distances between the transmitter, the receiver, and the RoI according to an embodiment of the present disclosure.
FIG. 22 illustrates a representative beamforming direction for sensing in an ISAC technology according to an embodiment of the present disclosure.
FIG. 23 illustrates a method for transmitting a sensing signal with a wide beam pattern in a RoI direction according to an embodiment of the present disclosure.
FIG. 24 illustrates a method for transmitting a sensing signal together with a beam sweeping operation with a narrow beam pattern in a RoI direction according to an embodiment of the present disclosure.
FIG. 25 illustrates a report and/or feedback operation method in which a receiver performs a report and/or feedback operation to a transmitter according to an embodiment of the present disclosure.
FIG. 26 illustrates a method for performing wireless communication by a first device according to an embodiment of the present disclosure.
FIG. 27 illustrates a method for performing wireless communication by a second device according to an embodiment of the present disclosure.
FIG. 28 shows a communication system 1, based on an embodiment of the present disclosure.
FIG. 29 shows wireless devices, based on an embodiment of the present disclosure.
FIG. 30 shows a signal process circuit for a transmission signal, based on an embodiment of the present disclosure.
FIG. 31 shows another example of a wireless device, based on an embodiment of the present disclosure.
FIG. 32 shows a hand-held device, based on an embodiment of the present disclosure.
FIG. 33 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, the term "configured or defined" may be interpreted as being pre-configured or configured to a device through pre-defined signaling (e.g., SIB, MAC, RRC, downlink control information (DCI), etc.) from a base station or a network. In the present disclosure, the term "configured or defined" may be interpreted as being pre-configured or configured to a device through pre-defined signaling (e.g., MAC, RRC, sidelink control information (SCI), control information signaled between devices, etc.) from another device. In the present disclosure, the term "configured or defined" may be interpreted as being pre-configured to a device.

In the present disclosure, a user equipment (UE) may refer to a device, a portable device, a wireless device, etc. In the present disclosure, a base station (BS) may refer to a radio access network (RAN) node, a non-terrestrial network (NTN) cell/node, a transmission reception point (TRP), a network, an integrated access and backhaul (IAB) node, a device, a portable device, a wireless device, etc.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet radio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

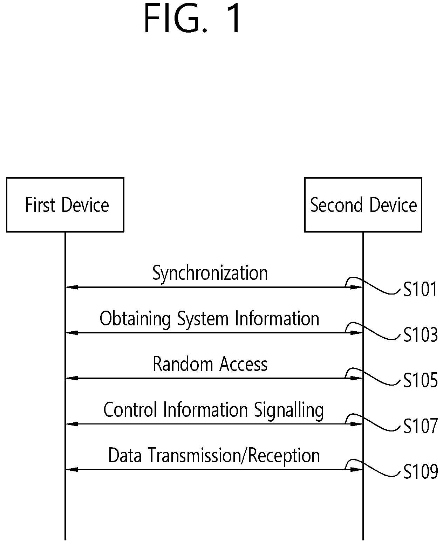

FIG. 1 shows a communication procedure between devices based on an embodiment of the present disclosure. The embodiment of FIG. 1 may be combined with various embodiments of the present disclosure.

Referring to FIG. 1, in step S101, a first device and a second device may perform synchronization. For example, the first device may be at least one of a UE and/or a device proposed in the present disclosure. For example, the second device may be at least one of a base station, a network, a RAN node, an NTN node/cell, a TRP, a UE, and/or a device proposed in the present disclosure. For example, the first device may perform an initial cell search operation. For example, the first device may detect at least one synchronization signal transmitted based on a rule pre-defined by the second device. Herein, for example, the synchronization signal may include a plurality of synchronization signals (e.g., a primary synchronization signal, a secondary synchronization signal, etc.) classified based on a structure or a purpose. By this, the first device may check a boundary of a frame, a subframe, a time unit, a slot and/or a symbol of the second device, and the first device may obtain information (e.g., a cell identifier) for the second device.

In step S103, the first device may obtain system information transmitted by the second device. For example, the system information may include information related to attributes, characteristics, and/or capabilities of the second device required to access the second device and use a service. For example, the system information may be classified based on content (e.g., whether it is essentially required for access), a transmission structure (e.g., a used channel, whether it is provided based on on-demand), etc. For example, the system information may be classified into a master information block (MIB) and a system information block (SIB). For example, as needed, the first device may transmit a signal requesting the system information prior to receiving the system information. For example, a request and provision of the system information may be performed after a random access procedure to be described later.

In step S105, the first device and the second device may perform a random access procedure. For example, the first device may transmit and/or receive at least one message (e.g., a random access preamble, a random access response message, etc.) for the random access procedure, based on information related to a random access channel of the second device (e.g., a channel position, a channel structure, a structure of a supported preamble, etc.) obtained through the system information. For example, the first device may transmit a preamble (e.g., Msg1) through a random access channel, and the first device may receive a random access response message (e.g., Msg2), and the first device may transmit a message (e.g., Msg3) including information related to the first device (e.g., identification information) to the second device by using scheduling information included in the random access response message, and the first device may receive a message (e.g., Msg4) for contention resolution and/or connection establishment. For example, Msg1 and Msg3 may be transmitted and received as one message (e.g., MsgA), and/or Msg2 and Msg4 may be transmitted and received as one message (e.g., MsgB).

In step S107, the first device and the second device may perform signaling of control information. Herein, for example, the control information may be defined in various layers such as a layer controlling a connection (e.g., a radio resource control (RRC) layer), a layer processing mapping between a logical channel and a transport channel (e.g., a media access control (MAC) layer), a layer processing a physical channel (e.g., a physical (PHY) layer), etc. For example, the first device and the second device may perform at least one of signaling for establishing a connection, signaling for determining a configuration related to communication, and/or signaling for indicating allocated resources. For example, the control information may be signaled/transmitted through a control channel. For example, the control information and/or the control channel may be used in scheduling at least one of data, a data channel (e.g., a shared channel), and/or control information on the data channel.

In step S109, the first device and the second device may transmit and/or receive data. For example, the first device and the second device may process data based on the signaling of the control information, and transmit and/or receive the data. For example, in a case of transmitting data, the first device or the second device may perform at least one of channel encoding, rate matching, scrambling, constellation mapping, layer mapping, waveform modulation, antenna mapping, and/or resource mapping for information bits. For example, in a case of receiving data, the first device or the second device may perform at least one of signal extraction from a resource, waveform demodulation for each antenna, signal arrangement considering layer mapping, constellation demapping, descrambling, and/or channel decoding.

For example, layers of a radio interface protocol between the first device and the second device may be classified into a first layer (layer 1, L1), a second layer (layer 2, L2), a third layer (layer 3, L3), etc. For example, a physical layer belonging to the first layer may provide an information transfer service using a physical channel, and a radio resource control (RRC) layer located in the third layer may perform a role of controlling radio resources between the first device and the second device. To this end, for example, the RRC layer may exchange an RRC message between the first device and the second device.

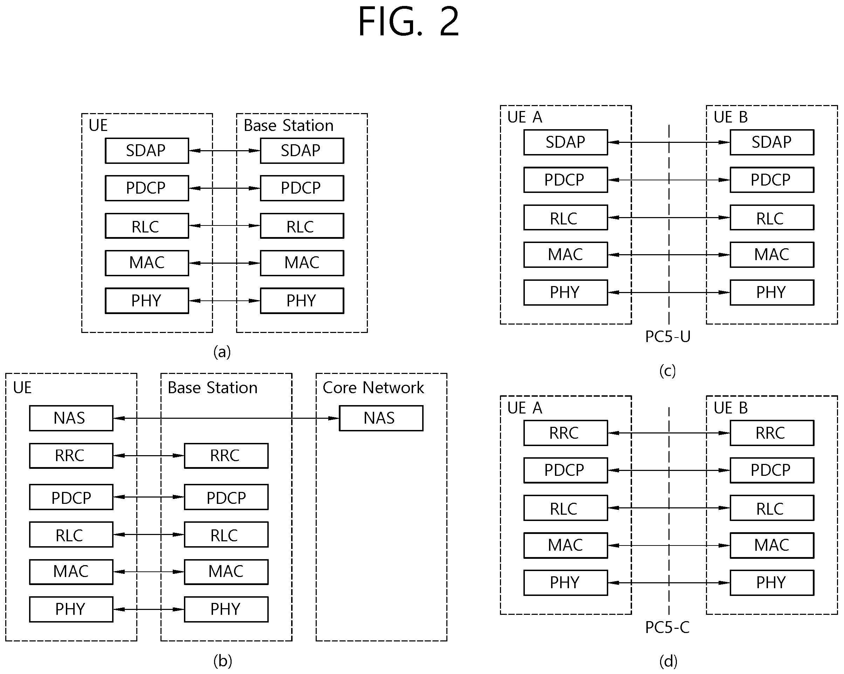

FIG. 2 shows a radio protocol architecture, based on an embodiment of the present disclosure. The embodiment of FIG. 2 may be combined with various embodiments of the present disclosure. For example, (a) of FIG. 2 may show a radio protocol stack of a user plane for uplink communication or downlink communication, and (b) of FIG. 2 may show a radio protocol stack of a control plane for uplink communication or downlink communication. For example, (c) of FIG. 2 may show a radio protocol stack of a user plane for inter-device communication, and (d) of FIG. 2 may show a radio protocol stack of a control plane for inter-device communication.

For example, the physical layer may provide an information transfer service to a higher layer using a physical channel. For example, the physical layer may be connected with a medium access control (MAC) layer, which is a higher layer, through a transport channel. For example, data may be transferred between the MAC layer and the physical layer through the transport channel. For example, the transport channel may be classified based on how and with what characteristics data is transmitted through a radio interface. For example, data may be transmitted through a physical channel between different physical layers, i.e., between physical layers of the first device and the second device. For example, the physical channel may be modulated in an orthogonal frequency division multiplexing (OFDM) scheme, and time and frequency may be utilized as radio resources.

For example, the MAC layer may provide a service to a radio link control (RLC) layer, which is a higher layer, through a logical channel. For example, the MAC layer may provide a mapping function from a plurality of logical channels to a plurality of transport channels. For example, the MAC layer may provide a logical channel multiplexing function by mapping from a plurality of logical channels to a single transport channel. For example, a MAC sub-layer may provide a data transmission service on a logical channel.

For example, the RLC layer may perform concatenation, segmentation, and reassembly of an RLC service data unit (SDU). For example, in order to guarantee various quality of service (QoS) required by a radio bearer (RB), the RLC layer may provide three operation modes of transparent mode (TM), unacknowledged mode (UM), and acknowledged mode (AM). For example, an AM RLC may provide error correction through an automatic repeat request (ARQ).

For example, the radio resource control (RRC) layer may be defined only in the control plane. For example, the RRC layer may serve to control the logical channel, the transport channel, and the physical channel in relation to configuration, reconfiguration, and release of radio bearers. For example, the RB may refer to a logical path provided by the first layer (e.g., the physical layer) and the second layer (e.g., the MAC layer, the RLC layer, a packet data convergence protocol (PDCP) layer, a service data adaptation protocol (SDAP) layer, etc.) for data delivery between the first device and the second device.

For example, a function of the PDCP layer in the user plane may include delivery of user data, header compression, and ciphering. For example, a function of the PDCP layer in the control plane may include delivery of control plane data and ciphering/integrity protection.

For example, the configuration of the RB may imply a process for specifying a radio protocol layer and channel properties to provide a particular service and for configuring each specific parameter and operation method. For example, the RB may be divided into two types: a signaling radio bearer (SRB) and a data radio bearer (DRB). For example, the SRB may be used as a path for transmitting an RRC message in the control plane, and the DRB may be used as a path for transmitting user data in the user plane.

For example, a downlink transport channel may include at least one of a broadcast channel (BCH) transmitting system information, and/or a downlink shared channel (SCH) transmitting user traffic or a control message other than that. For example, in a case of traffic or a control message of a downlink multicast or broadcast service, it may be transmitted through the downlink SCH, or it may be transmitted through a separate downlink multicast channel (MCH). Meanwhile, an uplink transport channel may include at least one of a random access channel (RACH) transmitting an initial control message, and/or an uplink shared channel (SCH) transmitting user traffic or a control message other than that. For example, the logical channel, which is located above the transport channel and mapped to the transport channel, may include at least one of a broadcast control channel (BCCH), a paging control channel (PCCH), a common control channel (CCCH), a multicast control channel (MCCH), and/or a multicast traffic channel (MTCH).

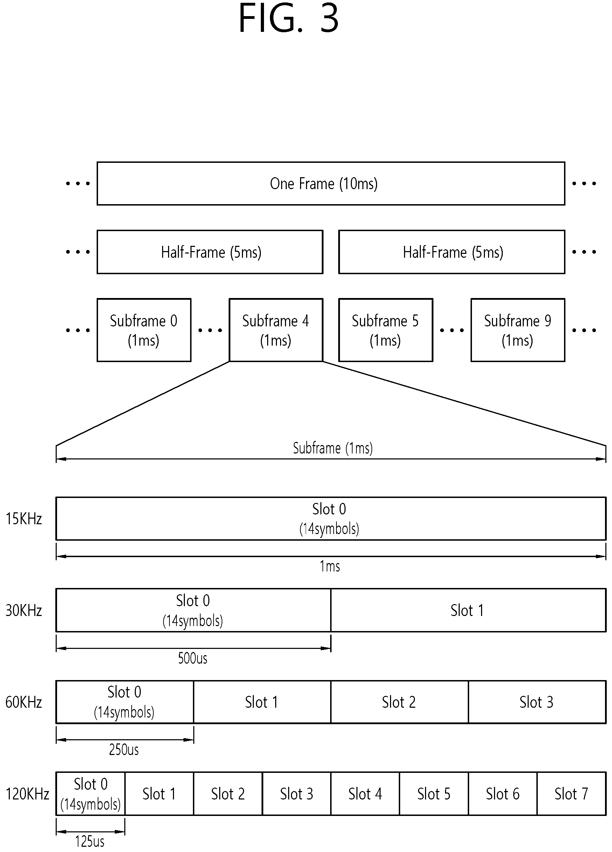

FIG. 3 shows a structure of a radio frame, based on an embodiment of the present disclosure. The embodiment of FIG. 3 may be combined with various embodiments of the present disclosure.

Referring to FIG. 3, for example, a radio frame may be used in uplink transmission, downlink transmission, and/or inter-device transmission. For example, the radio frame may have a length of 10ms, and may be defined as two 5ms half-frames (HF). For example, the half-frame may include five 1ms subframes (SF). For example, the subframe may be divided into one or more slots, and the number of slots within the subframe may be determined based on a subcarrier spacing (SCS). For example, each slot may include 12 or 14 OFDM(A) symbols based on a cyclic prefix (CP).

For example, in a case where a normal CP is used, each slot may include 14 symbols. For example, in a case where an extended CP is used, each slot may include 12 symbols. Herein, for example, the symbol may include an OFDM symbol (or, a CP-OFDM symbol), and/or a single carrier-FDMA (SC-FDMA) symbol (or, a Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

For example, between a plurality of cells aggregated to one UE, OFDM(A) numerologies (e.g., SCS, CP length, etc.) may be configured differently. Accordingly, an (absolute time) duration of a time resource (e.g., subframe, slot, or transmit time interval (TTI)) configured with the same number of symbols may be configured differently between the aggregated cells. For example, in the present disclosure, a time resource such as a subframe, a slot, a TTI, etc. may be referred to as a time unit.

For example, a plurality of numerologies or SCSs may be supported to support various services. For example, in a case where the SCS is 15kHz, a wide area in conventional cellular bands may be supported, and in a case where the SCS is 30kHz/60kHz, a dense-urban, a lower latency, and a wider carrier bandwidth may be supported. For example, in a case where the SCS is 60kHz or higher than that, a bandwidth greater than 24.25GHz may be supported to overcome phase noise.

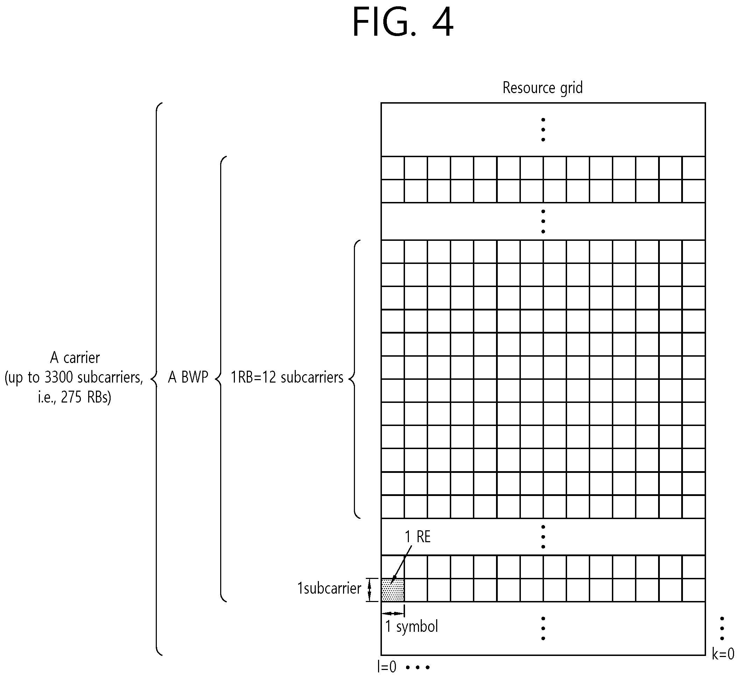

FIG. 4 shows a slot structure of a frame, based on an embodiment of the present disclosure. The embodiment of FIG. 4 may be combined with various embodiments of the present disclosure.

Referring to FIG. 4, for example, a slot may include a plurality of symbols in a time domain. For example, a carrier may include a plurality of subcarriers in a frequency domain. For example, a resource block (RB) may be defined as a plurality of consecutive subcarriers in the frequency domain. For example, a bandwidth part (BWP) may be defined as a plurality of consecutive (physical) resource blocks ((P)RB) in the frequency domain, and may correspond to one numerology (e.g., SCS, CP length, etc.). For example, a carrier may include a maximum of N BWPs (where N is a positive integer). For example, data communication may be performed through an activated BWP. For example, each element may be referred to as a resource element (RE) in a resource grid, and one complex symbol may be mapped to each element.

For example, a BWP may be a set of consecutive PRBs in a given numerology. For example, a PRB may be selected from a subset of consecutive common resource blocks (CRB) for a given numerology on a given carrier.

For example, a BWP may be at least one of an active BWP, an initial BWP, and/or a default BWP. For example, a UE may not monitor a downlink radio link quality in a DL BWP other than an active DL BWP on a primary cell (PCell). For example, the UE may not receive a physical downlink control channel (PDCCH), a physical downlink shared channel (PDSCH), or a channel state information-reference signal (CSI-RS) (excluding radio resource management (RRM)) outside the active DL BWP. For example, the UE may not trigger a channel state information (CSI) report for an inactive DL BWP. For example, the UE may not transmit a physical uplink control channel (PUCCH) or a physical uplink shared channel (PUSCH) outside an active UL BWP. For example, in a case of downlink, an initial BWP may be given as a set of consecutive resource blocks (RB) for a remaining minimum system information (RMSI) control resource set (CORESET) (configured by a physical broadcast channel (PBCH)). For example, in a case of uplink, an initial BWP may be given by a system information block (SIB) for a random access procedure. For example, a default BWP may be configured by a higher layer. For example, an initial value of the default BWP may be an initial DL BWP. For energy saving, if the UE does not detect downlink control information (DCI) for a certain period of time, the UE may switch the active BWP of the UE to the default BWP.

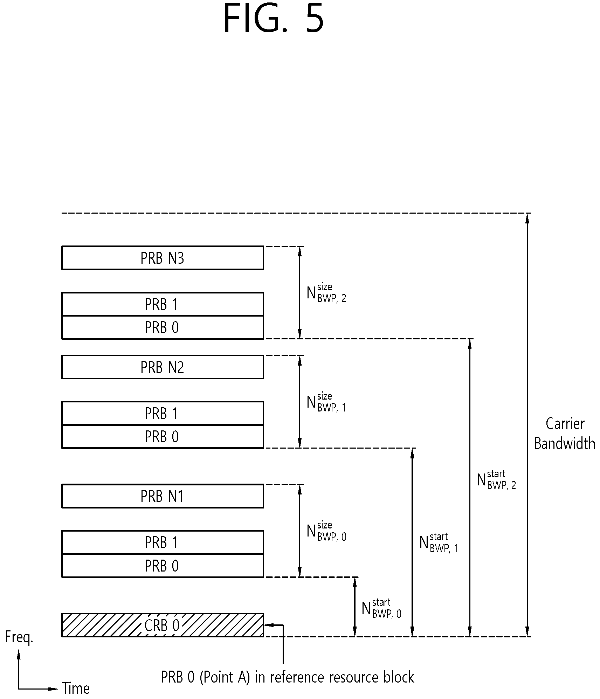

FIG. 5 shows an example of a BWP, based on an embodiment of the present disclosure. The embodiment of FIG. 5 may be combined with various embodiments of the present disclosure. In the embodiment of FIG. 5, it is assumed that there are three BWPs.

Referring to FIG. 5, for example, a common resource block (CRB) may be a carrier resource block numbered from one end of a carrier band to the other end thereof, and a PRB may be a resource block numbered within each BWP. For example, Point A may indicate a common reference point for a resource block grid.

For example, a BWP may be configured by Point A, an offset N^{start}_{BWP} from Point A, and a bandwidth N^{size}_{BWP}. For example, Point A may be an external reference point of a PRB of a carrier where subcarrier 0 of all numerologies (e.g., all numerologies supported by a network on the corresponding carrier) is aligned. For example, the offset may be a PRB interval between a lowest subcarrier and Point A in a given numerology. For example, the bandwidth may be the number of PRBs in the given numerology.

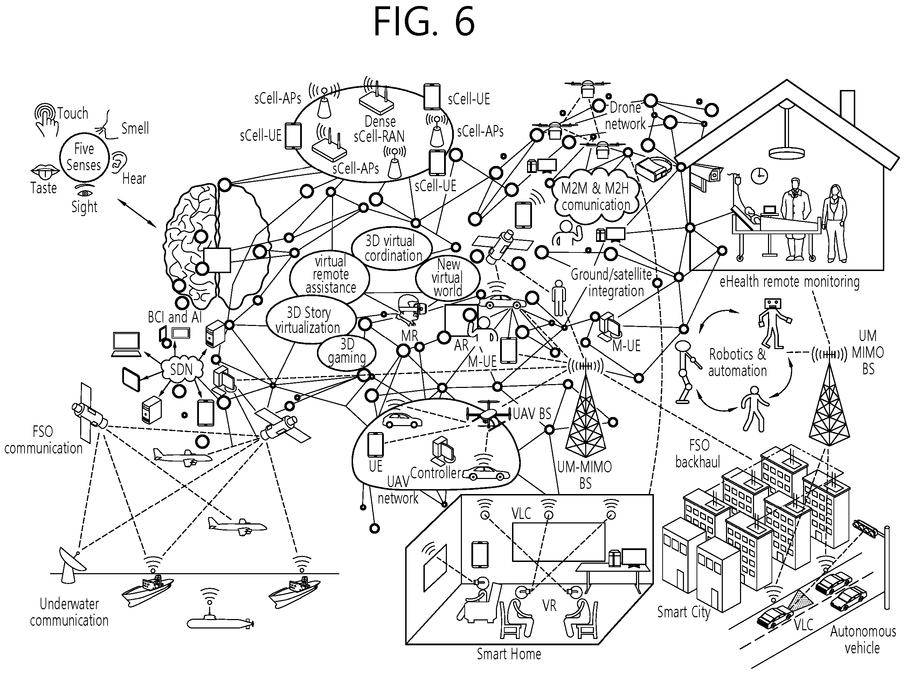

FIG. 6 shows a communication structure providable in a 6G system, based on an embodiment of the present disclosure. The embodiment of FIG. 6 may be combined with various embodiments of the present disclosure.

As core implementation technologies of the 6G system, technologies such as artificial intelligence (AI), Terahertz (THz) communication, optical wireless technology, free space optical (FSO) backhaul network, massive multiple input multiple output (MIMO) technology, blockchain, 3D networking, quantum communication, unmanned aerial vehicle, cell-free communication, wireless information and energy transfer (WIET), integrated sensing and communication, integrated access and backhaul network, holographic beamforming, big data analytics, large intelligent surface (LIS), etc. may be adopted.
- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Advanced air mobility (AAM): AAM may be a broad concept encompassing urban air mobility (UAM), regional air mobility (RAM), and an uncrewed aerial system (UAS). For example, AAM may include UAM, RAM, UAS, an uncrewed aerial vehicle (UAV), etc.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on.
- Non-terrestrial network (NTN): NTN may represent a network or a network segment using radio frequency (RF) resources mounted on a satellite (or a UAS platform). Use of an NTN service may be considered to secure wider coverage or to provide a wireless communication service to a place where installation of a wireless communication base station is not easy.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc.
- Reconfigurable intelligent surface (RIS): RIS may be used to manipulate and enhance signal propagation in a wireless communication environment. For example, RIS may be composed of meta-surfaces or many small antennas arranged on a surface, and each small antenna may actively adjust a phase, an amplitude, a polarization, etc. of a reflected signal. For example, RIS can improve signal reception by adjusting a path, a phase, and/or an intensity of a propagated signal. For example, in a case of RIS, because power is consumed only for phase and amplitude adjustment of small antennas, power consumption may be very low. For example, because RIS may be reconfigured in accordance with various environments, it can satisfy various communication requirements and can effectively operate in a dynamic network environment.

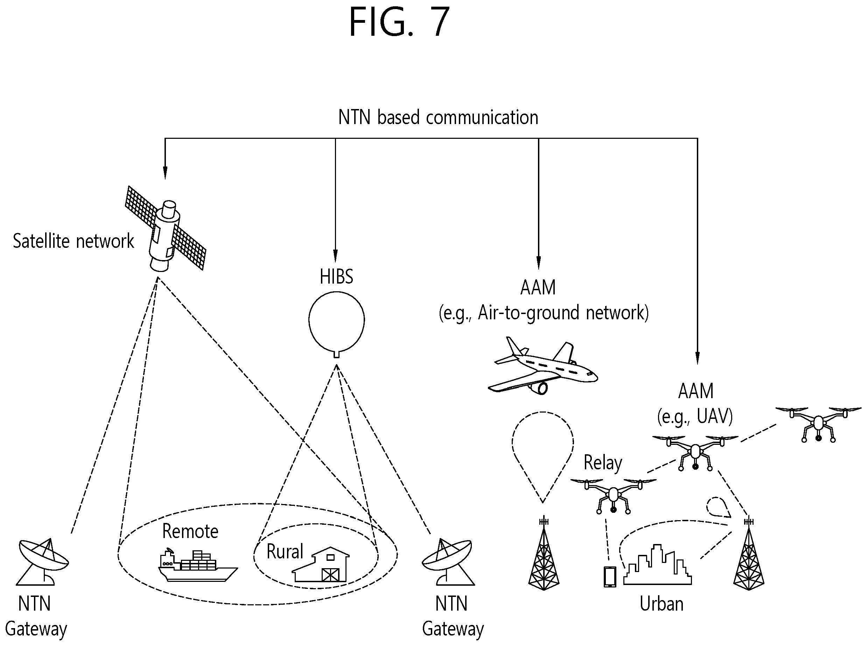

FIG. 7 shows an example of a communication scenario based on a 6G system, based on an embodiment of the present disclosure. The embodiment of FIG. 7 may be combined with various embodiments of the present disclosure.

Referring to FIG. 7, NTN communication may be performed based on a satellite network, high-altitude platform stations (HAPS) as international mobile telecommunications (IMT) base stations (BS) (HIBS), a UE (e.g., AAM) capable of aerial communication, etc. For example, for coverage enhancement, etc., a device such as the satellite network, the HIBS, the UE (e.g., AAM) capable of aerial communication, etc. may perform a role of a relay. For example, the AAM may perform communication with a base station, a satellite network, etc., and/or the AAM may perform direct communication with a UE, another AAM, etc.

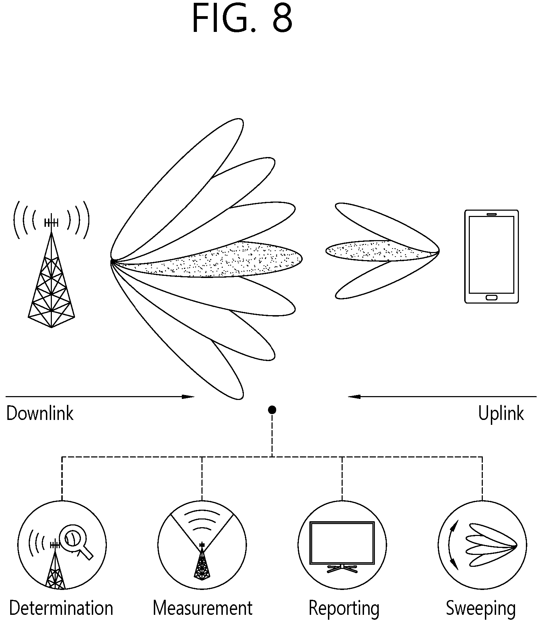

FIG. 8 shows beam management based on an embodiment of the present disclosure. The embodiment of FIG. 8 may be combined with various embodiments of the present disclosure.

Referring to FIG. 8, beam management may include beam determination, beam measurement, beam reporting, and/or beam sweeping. In the case of forming a beam using multiple antennas, a narrow antenna beam may be transmitted far in a specific direction, but may not cover the entire cell widely at once. Rather, if an antenna beam is formed in one direction, almost no antenna beam is formed in the other direction, so no signal may be transmitted. Therefore, in such cases, a transmitter or a receiver may transmit or receive data using beam forming, respectively. In this case, the transmitter or the receiver shall continuously update and manage the beam(s) used, which may be called beam management.

For example, the UE may perform the following operation-based sidelink FR2 (sidelink mmWave frequencies-based sidelink communication) operation.
- Beam sweeping operation: an operation that covers a spatial domain using transmit and/or receive beams for a certain time interval in a predefined manner
- Beam measurement operation: an operation that measures a reference signal (RS) transmitted by another device to find an RS whose measurement value is equal to or greater than a threshold
- Beam selection operation: an operation that selects the best beam (receive beam and/or transmit beam) based on the result of the beam measurement
- Beam reporting operation: an operation that reports the selected best beam to another device or the base station

Meanwhile, integrated sensing and communication technology may be a topic that has been mainly addressed in wireless communication technology, and may be referred to as Integrated Sensing and Communication (ISAC) or Joint Communication and Sensing (JCAS). A scope of integration technology of communication and sensing may be broad depending on a use and a level of integration, and may be developed and applied from various perspectives. For example, communication and sensing may operate independently while referring to functions mounted in a single device (hardware). Further, for example, communication and sensing may use the same frequency band, while communication and sensing may be performed with respective signals and operations. Further, for example, two functions of communication and sensing may be performed simultaneously using the same signal (waveform).

For example, a UE may use radio frequencies sensing to detect the instantaneous linear velocity, angle, distance (range), etc. of an object, thereby obtaining information about the environment and/or the characteristics of objects in the environment. Since the radio frequency sensing function does not require a connection to the object through a device in the network, it can provide a service for object positioning without a device. The ability to obtain range, velocity, and angle information from radio frequency signals can provide a wide range of new functions, such as various object detection, object recognition (e.g., vehicles, humans, animals, UAVs), and high-precision localization, tracking, and activity recognition. Wireless sensing services can provide information to various industries (e.g., unmanned aerial vehicles, smart homes, V2X, factories, railways, public safety, etc.) that enable applications that provide, for example, intruder detection, assisted vehicle steering and navigation, trajectory tracking, collision avoidance, traffic management, health and traffic management, etc. In some cases, wireless sensing can use non-3GPP type sensors (e.g., radar, camera) to additionally support 3GPP-based sensing. For example, the operation of a wireless sensing service, i.e., sensing operation, may depend on the transmission, reflection, and scattering of wireless sensing signals. Therefore, wireless sensing may provide an opportunity to enhance existing communication systems from communication networks to wireless communication and sensing networks.

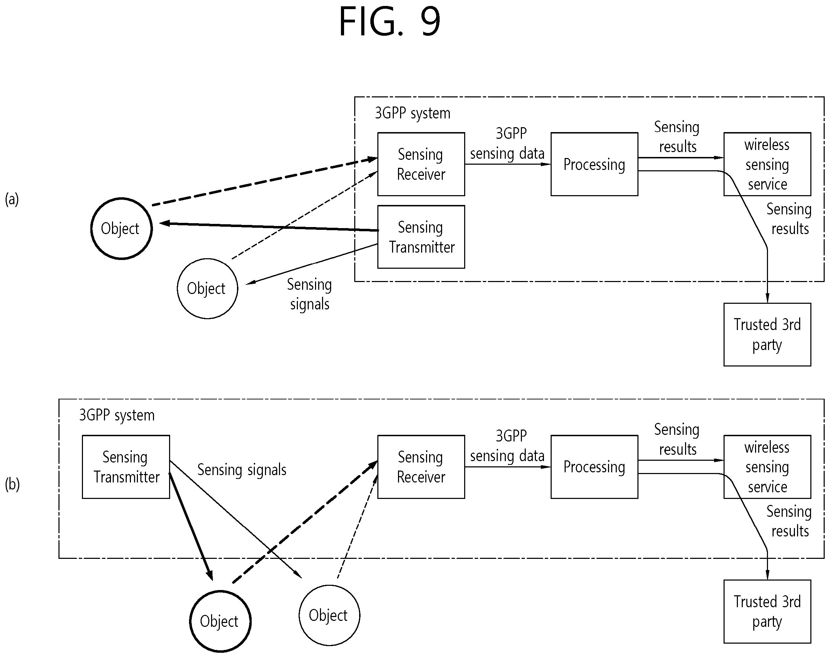

FIG. 9 illustrates an example of a sensing operation according to an embodiment of the present disclosure. The embodiment of FIG. 9 may be combined with various embodiments of the present disclosure. Specifically, FIG. 9 (a) illustrates an example of sensing using a sensing receiver and a sensing transmitter located at the same location (e.g., monostatic sensing), and FIG. 9 (b) illustrates an example of sensing using a separated sensing receiver and a sensing transmitter (e.g., bistatic sensing).

Referring to (a) of FIG. 9, the sensing transmitter may transmit a sensing signal for sensing one or more objects (and/or an environment around the objects). For example, the sensing signal may correspond to a radio (frequency) signal defined to be transmittable by a base station/terminal. For example, the sensing receiver may receive a signal scattered/reflected by one or more objects (and/or an environment around the objects) from the sensing signal transmitted from the sensing transmitter. For example, in the sensing receiver, sensing data may be derived from the scattered/reflected signal, and sensing results may be generated/obtained through processing of the sensing data. For example, the sensing result may include characteristic information (e.g., location, distance, speed, angle, etc.) about one or more objects (and/or environments around the objects). Here, for example, the sensing result generated/obtained in this way may be utilized for wireless sensing services (e.g., detection, tracking, etc. of objects and/or environments) provided in a wireless communication system based on a 6G network of the present disclosure, or may be provided/disclosed to a trusted third party.

For example, a sensing transmitter may be a base station or a UE that transmits a sensing signal to be used for operating a sensing service, and the sensing transmitter may be located at the same or a different base station or UE as a sensing receiver. For example, the sensing receiver may be a base station or a UE that receives the sensing signal to be used for operating the sensing service, and the sensing receiver may be located at the same or a different base station or UE as the sensing transmitter. For example, a sensing target may be a target that is to be detected by deriving characteristics of an object in an environment from the sensing signal. For example, a background environment may be a background (e.g., clutter, environmental objects, etc.) that is not the sensing target. For example, an environment object may be an object whose location is known in addition to the sensing target. For example, mono-static sensing may be sensing in which the sensing transmitter and the sensing receiver coexist in the same base station or UE. For example, bi-static sensing may be sensing in which the sensing transmitter and the sensing receiver are located in different base stations or UEs. For example, multi-static sensing may be sensing in which a plurality of sensing transmitters and/or a plurality of sensing receivers exist for a (single) sensing target. For example, mono-static sensing, bi-static sensing, and/or multi-static sensing may be distinguished based on an angle among the sensing transmitter, the sensing target, and the sensing receiver. For example, when the angle among the sensing transmitter, the sensing target, and the sensing receiver is less than or equal to a threshold, it may be defined as mono-static sensing or semi-mono-static sensing. For example, when the angle among the sensing transmitter, the sensing target, and the sensing receiver is greater than or equal to a threshold, it may be defined as bi-static sensing or multi-static sensing. For example, the UE may transmit the sensing signal on a wireless interface that may be used for a sensing purpose. For example, the UE may transmit the sensing signal on a 3GPP wireless interface that may be used for the sensing purpose.

For example, a common framework of an ISAC channel model may be composed of a component of a target channel and a component of a background channel. For example, this may be obtained based on Equation 1 below.${H}_{ISAC} = {H}_{target} + {H}_{background}$

Here, for example, a target channel H_{target} may include all [multi-path] components affected by a sensing target. For example, a background channel H_{Background} may include other [multi-path] components that do not belong to the target channel.

For example, radar cross-section (RCS) may be a measure of how detectable a target is by a radar sensor. Thus, it may often be referred to as an electromagnetic characteristic of the target. For example, a larger RCS may indicate that the target may be more easily detected. For example, in a radar sensor measurement, power may be transmitted toward a target, and the target may reflect a portion of the power to a receiver. For example, received power may be based on the RCS of the target, among other factors. For example, the received power may be proportional to the RCS. For example, the RCS of the target may be based on at least one of a frequency of a radar signal, a target material, a target shape, a target size, a direction of incident and reflected waves relative to the target, target movement, and/or target illumination.

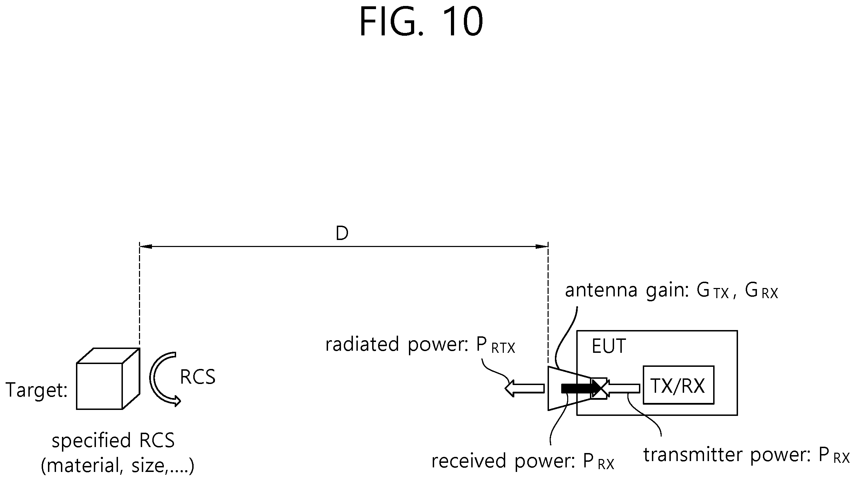

FIG. 10 illustrates a relationship among RCS, distance (D), and power according to an embodiment of the present disclosure. The embodiment of FIG. 10 may be combined with various embodiments of the present disclosure.

Referring to FIG. 10, an RCS of a radar target may be a hypothetical area required to intercept a power density transmitted toward the target. For example, a related radar equation may be defined as follows.${P}_{RX} = \frac{{P}_{TX} \times {G}_{TX}}{4 \times π \times {D}^{2}} \times RCS \times \frac{1}{4 \times π \times {D}^{2}} \times {A}_{eff}$

Here, for example, P_{TX} may be a transmitter power [W], G_{TX} may be a gain of a transmit antenna [dimensionless], D may be a distance [m] between an equipment under test (EUT) and a target, RCS may be a radar cross-section [m²], P_{RX} may be power [W] received again by the EUT from an object, and A_{eff} may be an effective area [m²] of a receive antenna. For example, A_{eff} may be obtained based on the following equation.${A}_{eff} = \frac{{G}_{RX} \times {λ}^{2}}{4 \times π}$

Here, for example, G_{RX} may be a gain of the receive antenna [dimensionless], λ may be a wavelength [m] of a radio signal, λ=c/f, c may be a speed of light of 299792458 [m/s], and f may be a frequency [Hz].

For example, when a transmitter and a receiver are co-located and the same antenna is used for transmission and reception (G_{TX}=G_{RX}=G), a related radar equation may be defined as follows.${P}_{RX} = \frac{{P}_{TX} \times {G}^{2} \times {λ}^{2}}{{\left(4\times π\right)}^{3} \times {D}^{4}} \times RCS$

Here, for example, P_{TX} may be the transmitter power [W], G may be the gain of the transmit antenna [dimensionless], D may be the distance [m] between the equipment under test (EUT) and the target, RCS may be the radar cross-section [m²], and P_{RX} may be the power [W] received again by the EUT from the object.

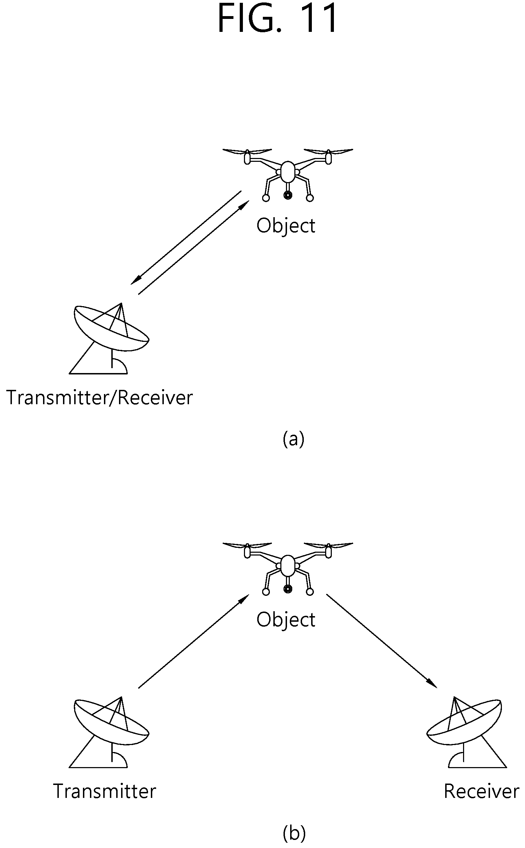

FIG. 11 illustrates mono-static ((a) of FIG. 11) sensing and bi-static ((b) of FIG. 11) sensing in ISAC technology according to an embodiment of the present disclosure. The embodiment of FIG. 11 may be combined with various embodiments of the present disclosure.

In ISAC technology, a detection/estimation/sensing operation may be the same as or similar to a radio detection and ranging (radar) operation. In general, radar may be classified into mono-static sensing and bi-static sensing according to whether a transmitter and a receiver are integrated. Referring to (a) of FIG. 11, a mono-static sensing operation may mean a method of detecting an object in which a signal transmitted from a transmitter is reflected by the object and is received by a receiver existing at the same location or device as the transmitter. Referring to (b) of FIG. 11, a bi-static sensing operation may mean a method of recognizing an object in which a signal transmitted by a transmitter is reflected by the object and is received by a receiver existing at a location different from the transmitter.

In the present disclosure, although a bi-static operation has been described for convenience of understanding, the proposal of the present disclosure may be applied not only to a bi-static operation but also to a mono-static operation, a multi-static operation, and the like. For example, bi-static sensing described in the present disclosure may mean mono-static sensing, multi-static sensing, and/or bi-static sensing. For example, in a sensing operation according to various embodiments of the present disclosure, for one sensing operation, a first device may perform a transmitter operation, and/or a second device may perform a receiver operation. For example, in a sensing operation according to various embodiments of the present disclosure, for one sensing operation, a first device may perform a transmitter operation, and/or the first device may perform a receiver operation. For example, the present disclosure is not limited to the above-described names.

In general, in a mono-static radar, a relationship between power (Pₜ) of a signal transmitted from a transmitter and power (Pᵣ) received by a receiver may be the same as Equation 5. The received power may be attenuated in inverse proportion to the fourth power of a distance (R) between the transmitter/receiver and an object with respect to the transmitted power.${P}_{r} = \frac{{G}_{t} {G}_{r} {σλ}^{2}}{{\left(4π\right)}^{3} {R}^{4}} {P}_{t}$

Here, Pᵣ may represent received power (W), Pₜ may represent transmitted power (W), Gₜ may represent a transmit antenna gain, Gᵣ may represent a receive antenna gain, σ may represent a radar cross section, λ may represent a wavelength, and R may represent a distance between a radar and an object.

At this time, for example, in the case of a bi-static or multi-static in which a transmitter and a receiver are separated, referring to (b) of FIG. 11, a distance from the transmitter to the object and a distance from the receiver to the object may be different. For example, at this time, the received power (Pᵣ) may be inversely proportional to the square of a distance (R_{Tx}) between the transmitter and the object as shown in Equation 6, and may be inversely proportional to the square of a distance (R_{Rx}) between the receiver and the object, such that the received power of the receiver may show a difference from the case in which the transmitter and the receiver are in one device (mono-static) described above. For example, when the transmitter and the receiver are at the same location or in one device (Mono-static), the distance (R_{Tx}) between the transmitter and the object and the distance (R_{Rx}) between the receiver and the object may be the same.${P}_{r} = \frac{{G}_{t} {G}_{r} {σλ}^{2}}{{\left(4π\right)}^{3} {R}_{Tx}^{2} , {R}_{Rx}^{2}} {P}_{t}$

Here, Pᵣ may represent received power (W), Pₜ may represent transmitted power (W), Gₜ may represent a transmit antenna gain, Gᵣ may represent a receive antenna gain, σ may represent a radar cross section, λ may represent a wavelength, R_{Tx} may represent a distance between a transmitting radar and an object, and R_{Rx} may represent a distance between a receiving radar and an object.

Meanwhile, when an object is detected in a situation in which a transmitter and a receiver are separated (bi-static or multi-static) in ISAC technology, communication between the transmitter and the receiver for accurate detection may be required. For example, information exchange such as detection area information, information of a detected object, and/or a degree of a sensing signal may be required between the transmitter and the receiver. For example, information exchange regarding beamforming of a transmitter and a receiver(s) for sensing in ISAC technology may be required. For example, a signal transmitted by the transmitter may need to have a direction and power of the transmitted signal limited in order to minimize interference with other (for example, communication, sensing) signals. In addition, for example, only a part of the transmitted signal incident on the object among signals transmitted by the transmitter may be reflected and received by the receiver. Therefore, for example, it may be necessary to transmit a transmitted signal sufficient for reception performance of the receiver in consideration of that a received signal strength may be further attenuated.

In the present disclosure, according to various embodiments, a method for determining transmission power by a UE and an apparatus supporting the same in ISAC technology are proposed.

In the present disclosure, according to various embodiments, information exchange and a beamforming operation between a transmitter and a receiver in performing bi-static sensing in ISAC technology are proposed.

At this time, the transmitter and the receiver may refer to a satellite, a base station, a user equipment (UE), and/or mobility (for example, a vehicle, a drone, a robot, etc.), and in one device/UE a role of the transmitter and/or a role of the receiver may be possible. For example, in bi-static sensing, a signal transmitted by a base station transmitter and reflected by an object may be received by a base station receiver. For example, various combinations may be possible such as a signal transmitted by a base station transmitter being reflected by an object and being received by a UE receiver. In addition, for example, in the same base station/UE, both transmission and reception of a signal for ISAC bi-static sensing may be performed (simultaneously and/or differentially). For example, in the same base station/UE, both transmission and reception of a signal for ISAC mono-static sensing may be performed (simultaneously and/or differentially). For example, various combinations may be possible in addition to the examples described above.

In the present disclosure, according to various embodiments, a bi-static detection/estimation and/or sensing operation in ISAC technology proposes an additional preprocessing and/or postprocessing operation based on a basic RADAR operation. For example, as a preprocessing operation for bi-static sensing, at least one of a transmitter, a receiver, and/or a third device (system, entity) may select and exchange an area to be detected (Target sensing/detection Area (TsA) or Region of Interest (RoI), hereinafter indicated as RoI) and/or a target object to be detected. For example, before performing bi-static sensing, an operation of exchanging signal information transmitted by the transmitter may be required. For example, as a postprocessing operation after performing bi-static sensing, an operation in which the receiver reports and/or provides feedback to the transmitter or the third device may be required. In addition, in the present disclosure, according to various embodiments, a beamforming operation of a transmitter and/or a receiver in performing bi-static sensing is proposed. For example, an operation of the transmitter and the receiver when a sensing signal is transmitted from a single transmitter to an arbitrary receiver and/or a plurality of receivers is described.

According to an effect of the configuration method proposed in the present disclosure, a limitation of a sensing area which is a problem of a conventional sensing operation may be resolved and performance of detecting an object may be improved. In addition, according to the bi-static sensing operation proposed in the present disclosure, the transmitter transmits with an optimal signal, and through this, unnecessary reception by the receiver of signals reflected/diffracted from objects existing in an area other than the RoI may be minimized, the receiver may focus on reception of a main signal, and reception of noise may be minimized.

For example, as a preprocessing operation performed before performing bi-static sensing, a transmitter, a receiver, and/or a third requester may set an RoI, and the RoI may need to be provided to the transmitter and the receiver. For example, at least one of the following methods may be used.

For example, a receiver may directly select an RoI and transmit an RoI information/message to a transmitter. For example, the receiver may transmit geographic information of the selected RoI to the transmitter. For example, the receiver may transmit an absolute position of the RoI and/or a position of the receiver and a relative position of the RoI from the receiver (for example, a distance and direction or relative coordinates) to the transmitter. For example, the receiver may select a predetermined radius (for example, a circle, an ellipse, a fan shape, a rectangle, etc.) of a current position or a movement path of the receiver as the RoI and may transmit a current position of the receiver, a movement path and direction, and/or a size of a detection area (for example, a radius, an angle, an offset, etc.) to the transmitter. For example, thereafter the transmitter may transmit a sensing signal to the received RoI in order to perform bi-static sensing such that the receiver may detect a signal reflected by an object.

At this time, for example, when the receiver transmits the RoI, the transmitter may be a specific transmitter. For example, when the receiver transmits the RoI, the transmitter may be an arbitrary transmitter. For example, when the receiver transmits the RoI, the transmitter may be a plurality of transmitters. For example, when the receiver requests an arbitrary transmitter or a plurality of transmitters to transmit a bi-static sensing signal, the receiver may transmit the RoI information/message (for example, broadcasting, multicasting/groupcasting) such that a bi-static sensing operation may be performed with a single transmitter or a plurality of transmitters among multiple transmitter candidates.

For example, a transmitter may directly select an RoI and transmit an RoI information/message to a receiver. At this time, for example, the receiver may be a specific single receiver, an arbitrary single receiver, a specific plurality of receiver groups, or an unspecified plurality of receivers.

For example, the transmitter may transmit geographic information of the RoI to the receiver. For example, the transmitter may transmit an absolute position of the RoI and/or a position of the transmitter and a relative position of the RoI from the transmitter (for example, a distance and direction or relative coordinates) to the receiver. Alternatively, for example, the transmitter may select a predetermined radius (for example, a circle, an ellipse, a fan shape, a rectangle, etc.) of a current position or a movement path of the transmitter as the RoI and may transmit a current position of the transmitter, a movement path and direction, and/or a size of a detection area (for example, a radius, an angle, an offset, etc.) to the receiver.

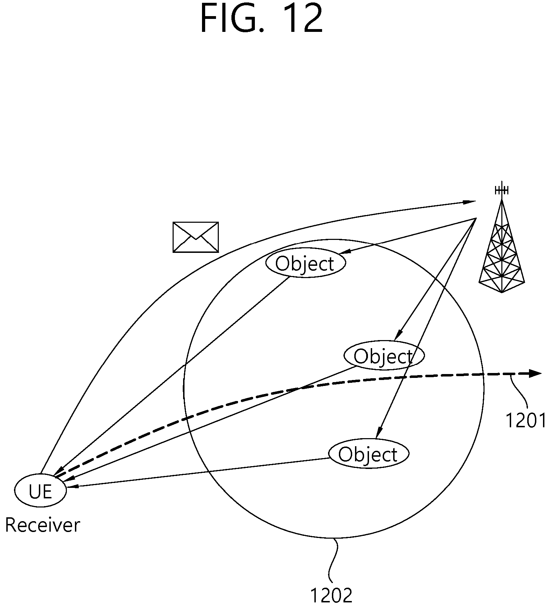

FIG. 12 illustrates a method for selecting an RoI by using information of a receiver according to an embodiment of the present disclosure. The embodiment of FIG. 12 may be combined with various embodiments of the present disclosure.

Referring to FIG. 12, for example, a transmitter may select an RoI based on information (for example, position, moving speed, direction, etc.) of a specific single receiver or a receiver group. At this time, for example, the receiver may be a fixed object or a moving object, and when the receiver is a mobile UE or mobility, the information may be more diverse. For example, the information may include a position, a speed, an acceleration, a direction, a steering angle, an orientation (roll, pitch, yaw), and/or a planned path of the mobility. For example, the transmitter that acquires such information may calculate an appropriate RoI. For example, for this purpose, the receiver may transmit its information to the transmitter periodically or aperiodically and/or based on a request (On-demand), and/or may transmit the information to the transmitter through an existing message (for example, a V2X message). For example, the transmitter may estimate or predict a movement path by using the acquired information of the receiver and may set a predetermined radius or area of the movement path as the RoI. In one example of FIG. 12, the receiver (UE) may transmit its information (for example, position, direction, speed, etc.) to the transmitter (base station) through a message (for example, BSM, PSM, CAM, VAM, etc.), and the transmitter receiving the message may obtain an expected movement path (dotted arrow 1201) of the receiver through AI/ML or various algorithms. For example, the transmitter may select a valid RoI (circular area 1202) on the movement path and may transmit a bi-static sensing signal. For example, the transmitter may directly select the RoI without calculating the movement path.

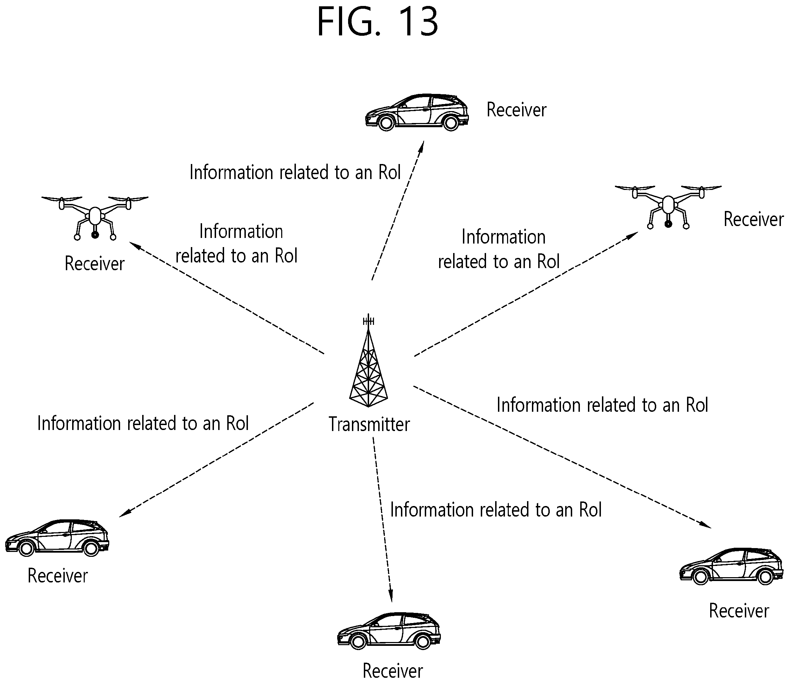

FIG. 13 illustrates a method in which a transmitter transmits an RoI to a receiver according to an embodiment of the present disclosure. The embodiment of FIG. 13 may be combined with various embodiments of the present disclosure.

Referring to FIG. 13, for example, a transmitter may transmit a directly selected RoI to an arbitrary single receiver or an unspecified plurality of receivers. For example, the transmitter may transmit RoI information to a specific single receiver, and/or the transmitter may transmit the RoI information to an arbitrary receiver through broadcasting. At this time, for example, the transmitter may transmit information to the RoI regardless of whether the receivers desire to receive an ISAC bi-static sensing signal.

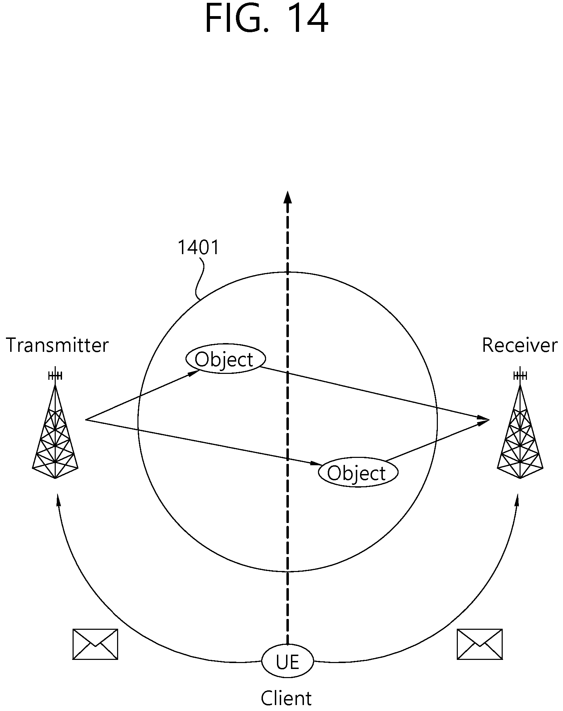

FIG. 14 illustrates a method in which a third device selects an RoI and transmits the RoI to a transmitter and/or a receiver according to an embodiment of the present disclosure. The embodiment of FIG. 14 may be combined with various embodiments of the present disclosure.

Referring to FIG. 14, for example, a third device (for example, a sensing information requester) may select an RoI and then transmit the RoI to a specific transmitter/receiver or an arbitrary transmitter/receiver. Alternatively, for example, a combination with the above methods may also be possible. For example, a third sensing information requester may select an RoI and may transmit the RoI to a specific transmitter and an arbitrary receiver, or may transmit the RoI to an arbitrary transmitter and a receiver. In one example of FIG. 14, a third device (for example, a UE) may select a sensing area required on its movement path (a circular area 1401 between base stations) as the RoI. At this time, for example, an information requester (Client) transmits RoI information to a transmitter (left, Transmitter) and a receiver (right, Receiver), and the transmitter and the receiver receiving the RoI information may perform bi-static sensing.

For example, in the RoI selection and transmission method proposed above, a subject requesting sensing information may be different. For example, although the subject requesting or using the sensing information is the transmitter, the RoI may be selected by the receiver and transmitted to the transmitter. Alternatively, for example, the subject requesting or using the sensing information may be a third device/UE, and the transmitter may directly select the RoI. For example, in addition to the combinations listed above, an RoI selection method based on various combinations of the transmitter, the receiver, and/or the third device may be possible.

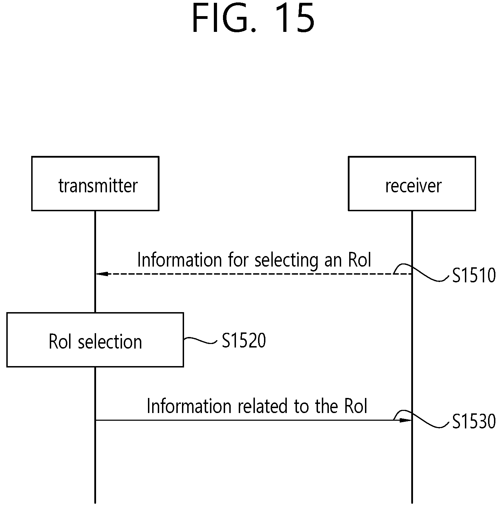

FIG. 15 illustrates a method in which a transmitter selects and transmits an RoI according to an embodiment of the present disclosure. The embodiment of FIG. 15 may be combined with various embodiments.

Referring to FIG. 15, for example, in step S1510, the transmitter may obtain information for selecting an RoI from the receiver. For example, in step S1520, the transmitter may select the RoI based on the obtained information. For example, in step S1530, the transmitter may transmit information related to the RoI to the receiver. For example, in addition to the combinations listed above, an RoI selection and/or transmission method based on various combinations of the transmitter, the receiver, and/or the third device may be possible, and is not limited to the above-described combinations.

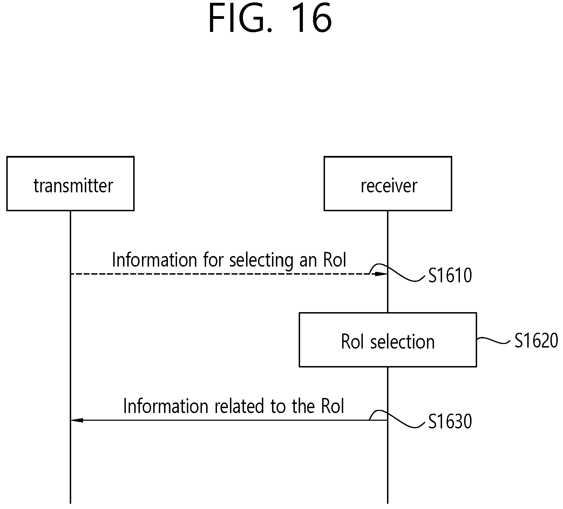

FIG. 16 illustrates a method in which a receiver selects and transmits an RoI according to an embodiment of the present disclosure. The embodiment of FIG. 16 may be combined with various embodiments.

Referring to FIG. 16, for example, in step S1610, the receiver may obtain information for selecting an RoI from the transmitter. For example, in step S1620, the receiver may select the RoI based on the obtained information. For example, in step S1630, the receiver may transmit information related to the RoI to the transmitter. For example, in addition to the combinations listed above, an RoI selection and/or transmission method based on various combinations of the transmitter, the receiver, and/or the third device may be possible, and is not limited to the above-described combinations.

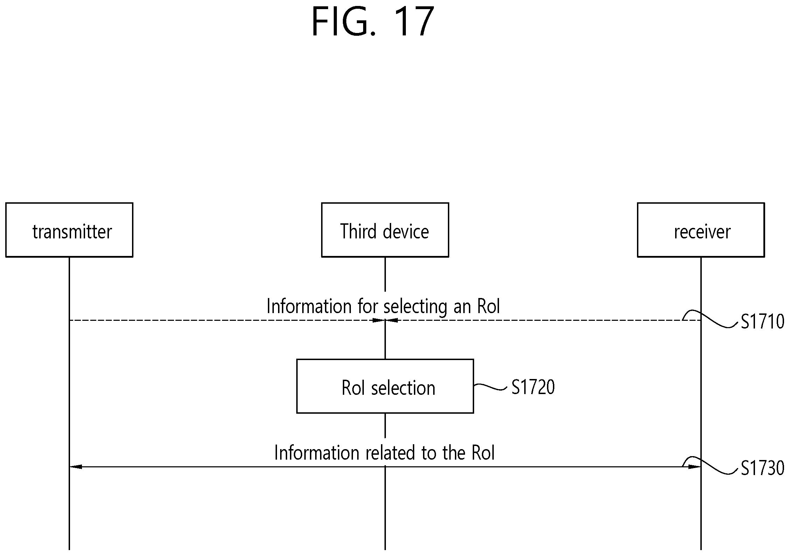

FIG. 17 illustrates a method in which a third device selects and transmits an RoI according to an embodiment of the present disclosure. The embodiment of FIG. 17 may be combined with various embodiments.

Referring to FIG. 17, for example, in step S1710, the third device may obtain information for selecting an RoI from the transmitter and/or the receiver. For example, in step S1720, the third device may select the RoI based on the obtained information. For example, in step S1730, the third device may transmit information related to the RoI to the transmitter and/or the receiver. For example, in addition to the combinations listed above, an RoI selection and/or transmission method based on various combinations of the transmitter, the receiver, and/or the third device may be possible, and is not limited to the above-described combinations.

For example, in order for at least one of the transmitter, the receiver, and/or the third device to select and share the RoI, prior signal information exchange for a detection/estimation/sensing operation may be required in addition to communication/information exchange between the devices. For example, the transmitter, the receiver, and/or the third device may exchange information between the transmitter and the receiver (for example, ID, a reference signal, a time sync signal, an antenna characteristic (Antenna pattern), etc.).

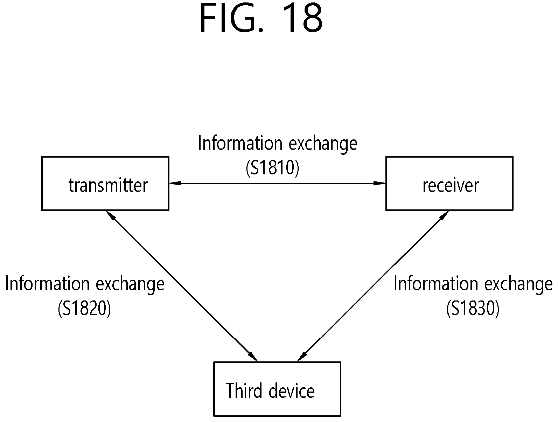

FIG. 18 illustrates a method of information exchange between a transmitter, a receiver, and/or a third device according to an embodiment of the present disclosure. The embodiment of FIG. 18 may be combined with various embodiments of the present disclosure.

Referring to FIG. 18, for example, in step S1810, prior signal information for sensing between the transmitter and the receiver may be exchanged. For example, in step S1820, prior signal information for sensing between the transmitter and the third device may be exchanged. For example, in step S1830, prior signal information for sensing between the receiver and the third device may be exchanged. For example, in step S1810, post signal information for sensing between the transmitter and the receiver may be exchanged. For example, in step S1820, post signal information for sensing between the transmitter and the third device may be exchanged. For example, in step S1830, post signal information for sensing between the receiver and the third device may be exchanged. For example, in addition to the combinations listed above, prior and/or post information exchange based on various combinations of the transmitter, the receiver, and/or the third device may be possible, and is not limited to the above-described combinations. In addition, for example, the prior and/or post information exchange is not limited to the above-described names.

In the present disclosure, according to various embodiments, a bi-static sensing operation (beamforming) of a transmitter and a receiver is proposed in a situation in which RoI and/or signal information between the transmitter and the receiver are exchanged by the methods listed above. For convenience of understanding, operations of the transmitter and the receiver are described separately, and this indicates a distinction of operations rather than a distinction of devices. For example, in the same device, both a transmitter operation and a receiver operation may be possible. For example, a case in which device A performs a transmitter operation and device B performs a receiver operation (first bi-static sensing) and at the same time device B performs a transmitter operation and device A performs a receiver operation (second bi-static sensing) may be possible, and/or a case in which device A performs a transmitter operation and device B performs a receiver operation (first bi-static sensing) and at the same time device A performs a receiver operation and device C performs a transmitter operation (third bi-static sensing) may be possible. For example, in addition to the combinations listed above, operations based on various combinations of device A, device B, and/or device C may be possible, and are not limited to the number of devices and/or combinations described above. In addition, for example, the operations are not limited to the above-described names.

In the present disclosure, according to various embodiments, an optimal signal strength (transmit signal power) and direction for transmitting to a RoI from a transmitter in order to perform bistatic sensing are proposed.

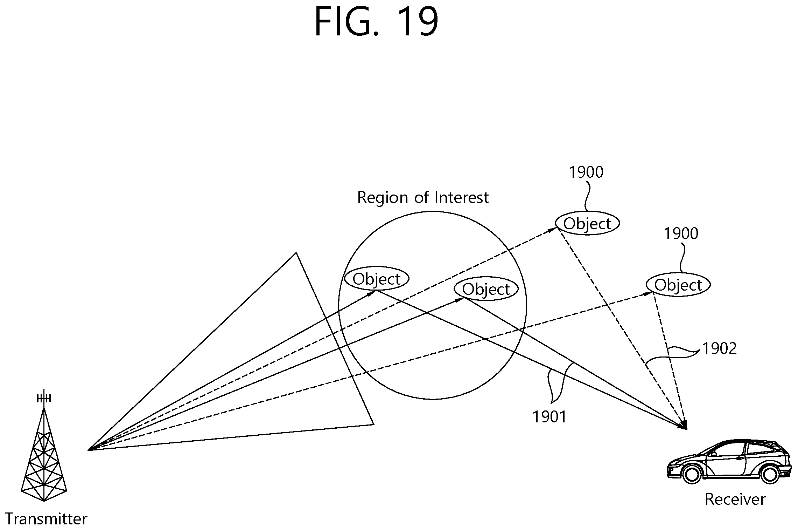

FIG. 19 illustrates a case in which a sensing signal is transmitted with excessive transmit signal strength according to an embodiment of the present disclosure.

Referring to FIG. 19, when the transmitter transmits a sensing signal with the maximum transmit signal strength, the receiver may unnecessarily receive signals reflected or diffracted by objects located outside the RoI (for example, objects 1900 outside the RoI in FIG. 19), which may increase interference among different signals. In the present disclosure, according to various embodiments, in order to address this problem, it is proposed to transmit a sensing signal with an optimal signal strength/power in the following manner.

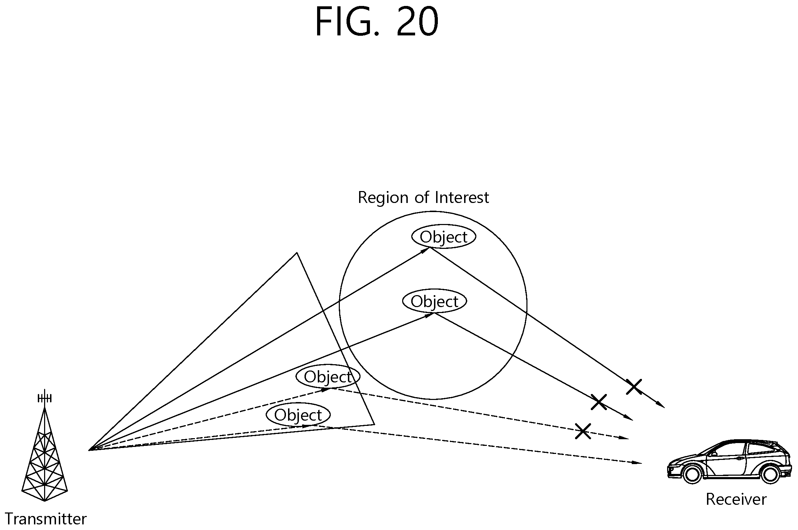

FIG. 20 illustrates a case in which a sensing signal is transmitted with insufficient transmit signal strength according to an embodiment of the present disclosure.

Referring to FIG. 20, when the transmitter transmits a sensing signal with a transmit signal strength lower than a minimum required signal strength, the receiver may fail to receive signals reflected or diffracted from an object located in the RoI region, or even if received, the reliability thereof may be reduced. In the present disclosure, according to various embodiments, in order to address this problem, it is proposed to transmit a sensing signal with an optimal signal strength/power in the following manner.

In the present disclosure, the term signal strength may refer to power, power may refer to signal strength, and/or signal power may refer to signal strength. For example, sensing signal strength may refer to sensing signal power. For example, transmit signal strength may refer to transmit power. For example, received signal strength may refer to received power. In addition, the present disclosure is not limited to the above-described terms.

For example, the optimal sensing signal strength may be expressed as a minimum required signal strength of the transmitter (P_{t,min}) which is derived by modifying Equation 6 as shown in Equation 7, and the transmitter may set the transmit signal strength to a value greater than or equal to this value. For example, the optimal signal strength of the transmitter may be determined by adding an offset value and/or a calibration factor to the minimum required signal strength. For example, the offset value and the calibration factor may be changed and applied according to characteristics of a device and/or an environment.${P}_{t , min} = \frac{{\left(4π\right)}^{3} {R}_{Tx}^{2} {R}_{Rx}^{2}}{{G}_{t} {G}_{r} {σλ}^{2}} {P}_{r , min}$

Here, P_{r,min} may represent the minimum required received power (W), P_{t,min} may represent the minimum required transmit power (W), Gₜ may represent the transmit antenna gain, Gᵣ may represent the receive antenna gain, σ may represent the radar cross section, λ may represent the wavelength, R_{Tx} may represent a distance between the transmit radar and the object, and R_{Rx} may represent a distance between the receive radar and the object.

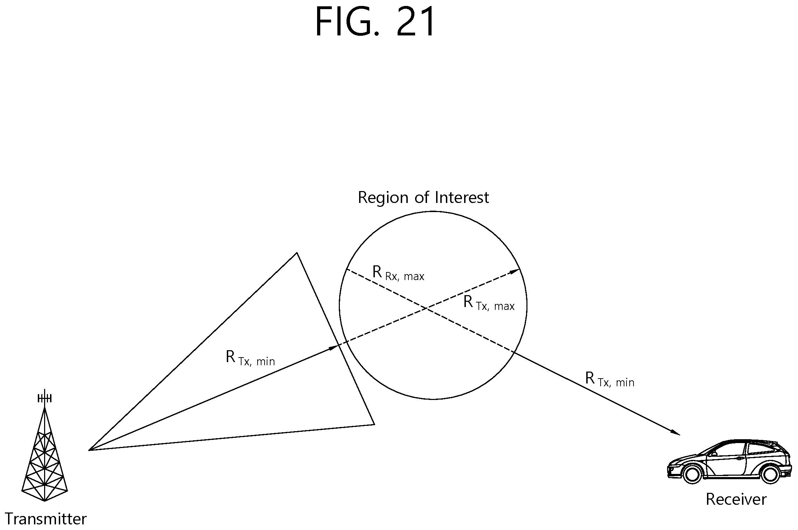

FIG. 21 illustrates the maximum and minimum distances between the transmitter, the receiver, and the RoI according to an embodiment of the present disclosure. The embodiment of FIG. 21 may be combined with various embodiments of the present disclosure.

Referring to FIG. 21, for example, the minimum distance between the transmitter and the RoI (R_{Tx,min}) may refer to the shortest spatial distance through which a sensing signal is transmitted from the transmitter to the RoI. For example, the minimum distance between the transmitter and the RoI (R_{Tx,min}) may refer to a distance at which attenuation of the signal strength/power is the smallest when the sensing signal is transmitted from the transmitter to the RoI. For example, the maximum distance between the transmitter and the RoI (R_{Tx,max}) may refer to the longest spatial distance through which the sensing signal is transmitted from the transmitter to the RoI. For example, the maximum distance between the transmitter and the RoI (R_{Tx,max}) may refer to a distance at which attenuation of the signal strength/power is the largest when the sensing signal is transmitted from the transmitter to the RoI. For example, the minimum distance between the receiver and the RoI (R_{Rx,min}) may refer to the shortest spatial distance through which a sensing signal is transmitted from the RoI to the receiver. For example, the minimum distance between the receiver and the RoI (R_{Rx,min}) may refer to a distance at which attenuation of the signal strength/power is the smallest when the sensing signal is transmitted from the RoI to the receiver. For example, the maximum distance between the receiver and the RoI (R_{Rx,max}) may refer to the longest spatial distance through which the sensing signal is transmitted from the RoI to the receiver. For example, the maximum distance between the receiver and the RoI (R_{Rx,max}) may refer to a distance at which attenuation of the signal strength/power is the largest when the sensing signal is transmitted from the RoI to the receiver. For example, the present disclosure is not limited to the above-described terms.

For example, P_{r,min} may represent a minimum required signal strength of a receiver required for an object detection operation of the receiver, and may mean a minimum detectable signal. For example, based on a minimum power level receivable at the receiver (Minimum Detectable Signal, MDS), the minimum required signal strength of the receiver may be affected by an input noise level, a signal to noise ratio, thermal noise (Noise floor), and/or a measurement bandwidth (MBW). In an example of FIG. 21, a range of a distance (R_{Tx}) between the transmitter and the object and a distance (R_{Rx}) between the receiver and the object in the RoI may be R_{Tx,min} ≤ R_{Tx} ≤ R_{Tx,max}, R_{Rx,min} ≤ R_{Rx} ≤ R_{Rx,max}. For example, when the minimum required signal strength (Pr,min) of the receiver and the ranges of the distance (R_{Tx}) between the transmitter and the object and the distance (R_{Rx}) between the receiver and the object in the RoI are given, the transmitter, the receiver, and/or a third device may derive a minimum required signal strength (P_{t,min}) of the transmitter. For example, as shown in Equation 8, a minimum required signal strength of the transmitter may be obtained based on a maximum distance between the transmitter, the receiver, and the RoI, and an optimal transmit signal strength may be determined by adding a calibration factor. For example, the transmitter, the receiver, and/or a third device may obtain a minimum required signal strength of the transmitter based on a maximum distance between the receiver and the RoI, and may determine a maximum allowable transmit signal strength by adding a calibration factor. For example, a minimum required signal strength, an optimal transmit signal strength, and/or a maximum allowable transmit signal strength may be determined based on various combinations of a range of the distance (R_{Tx}) between the transmitter and the object, a range of the distance (R_{Rx}) between the receiver and the object, and/or a calibration factor, and it is not limited to the above-described combinations. In addition, for example, the minimum required signal strength, the optimal transmit signal strength, and/or the maximum allowable transmit signal strength are not limited to the above-described names. In addition, for example, the minimum required signal strength, the optimal transmit signal strength, and/or the maximum allowable transmit signal strength are not limited to the above-described names.${P}_{t} = \frac{{\left(4π\right)}^{3} {R}_{Tx , max}^{2} {R}_{Rx , max}^{2}}{{G}_{t} {G}_{r} {σλ}^{2}} {P}_{r , min} + Calibration factor$

Here, P_{r,min} may represent a minimum required received power (W), Pₜ may represent an optimal transmit power (W), Gₜ may represent a transmit antenna gain, Gᵣ may represent a receive antenna gain, σ may represent a radar cross section, λ may represent a wavelength, R_{Tx,max} may represent a maximum distance between a transmit radar and an object, and R_{Rx,max} may represent a maximum distance between a receive radar and the object.

For example, information for determining the minimum required signal strength, the optimal transmit signal strength, and/or the maximum allowable transmit signal strength may be obtained through the above-described prior signal information exchange. For example, the minimum required signal strength, the optimal transmit signal strength, and/or the maximum allowable transmit signal strength may be exchanged between the transmitter, the receiver, and/or a third device through the above-described prior signal information exchange. For example, the transmitter may determine the minimum required signal strength, the optimal transmit signal strength, and/or the maximum allowable transmit signal strength. For example, the receiver may determine the minimum required signal strength, the optimal transmit signal strength, and/or the maximum allowable transmit signal strength. For example, a third device may determine the minimum required signal strength, the optimal transmit signal strength, and/or the maximum allowable transmit signal strength. For example, combinations other than those listed above including various combinations of the transmitter, the receiver, and/or the third device may be included, and it is not limited to the above-described combinations. In addition, for example, the present disclosure is not limited to the above-described names.

Meanwhile, in the present disclosure, according to various embodiments, changing antenna array configurations in a beamforming array antenna or a Multiple input Output (MIMO) system in order to transmit an optimal signal to the RoI is proposed. That is, for example, due to the ranges of the distance (R_{Tx}) between the transmitter and the object and the distance (R_{Rx}) between the receiver and the object in the RoI, the transmitter may structure and/or set an antenna array in order to transmit an optimal signal within a range of an optimal signal distance (R = R_{Tx} + R_{Rx}). For example, in a MIMO system, the optimal signal distance (R) may be determined by an array structure and/or setting of an antenna. For example, an optimal signal distance may be determined due to a number of antenna array elements (Nₜ, Nᵣ) of the transmitter and the receiver, a distance between antenna array elements (dₜ, dᵣ), a distance between antenna arrays (Lₜ, Lᵣ), and/or a signal wavelength (λ). That is, in the present disclosure, according to various embodiments, transmitting by changing an antenna configuration in order to transmit a bistatic sensing signal optimal for the RoI is proposed. For example, through several assumptions, the optimal signal distance R may be expressed as shown in Equation 9 below, and an optimal signal may be transmitted to the transmitter, the receiver, and the RoI by changing at least one setting among a number of antenna array elements (Nₜ, Nᵣ) of the transmitter and the receiver, a distance between antenna arrays (Lₜ, Lᵣ), and/or a signal wavelength (λ). For example, when the number of antenna array elements (Nₜ, Nᵣ) is determined, the optimal signal distance may increase as the array spacing (Lₜ, Lᵣ) increases, or the optimal signal distance may increase as the number of arrays (Nₜ, Nᵣ) increases for a given array spacing (Lₜ, Lᵣ), but it may not be optimal for the RoI. That is, in the present disclosure according to various embodiments, changing at least one of setting elements of an antenna array (for example, the number of arrays, a wavelength, or an array spacing) in order to transmit a signal optimized for a distance (R) corresponding to the RoI is proposed.$R = \frac{max \left\{{N}_{t}, {N}_{r}\right\}}{λ} {L}_{t} {L}_{r}$

Here, Nₜ may represent a number of transmit antenna array elements, Nᵣ may represent a number of receive antenna array elements, Lₜ may represent a transmit antenna array spacing, Lᵣ may represent a receive antenna array spacing, λ may represent a wavelength, and R may represent an optimal signal distance.

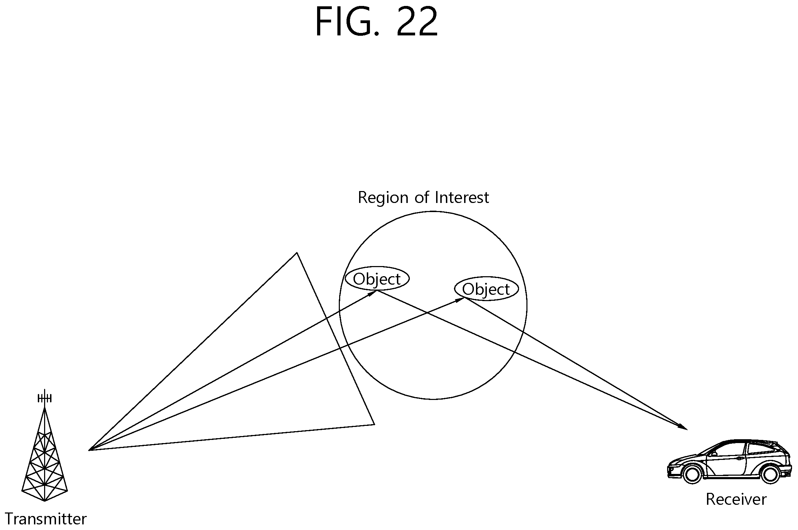

FIG. 22 illustrates a representative beamforming direction for sensing in an ISAC technology according to an embodiment of the present disclosure. The embodiment of FIG. 22 may be combined with various embodiments of the present disclosure.

Referring to FIG. 22, for example, a direction of an optimal transmit signal transmitted by a transmitter may be a RoI direction (a LoS between the transmitter and the RoI). For example, among them, it may mean a direction in which a receiver may maximally receive a signal/beam reflected/diffracted by an object in consideration of a location of the receiver. In one example of FIG. 22, a case in which the transmitter performs a beamforming operation in a direction of the RoI (circular region) and the receiver receives a signal reflected by the object may be representative. In addition, for example, when setting a transmit signal of the transmitter for bistatic sensing (for example, an antenna pattern), an optimal transmit signal strength of the transmitter and/or a signal in the RoI direction proposed in the present disclosure may be set. For example, in the above-described case, a RoI direction beamforming operation of the transmitter may be one of methods described below.

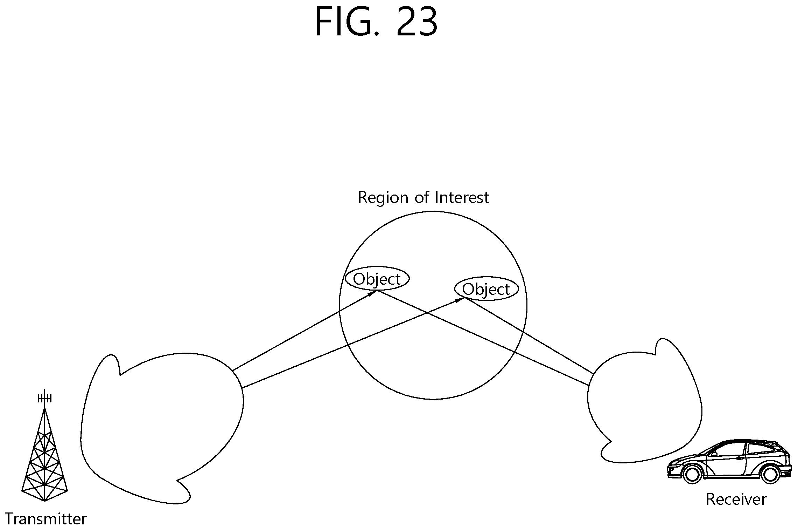

FIG. 23 illustrates a method for transmitting a sensing signal with a wide beam pattern in a RoI direction according to an embodiment of the present disclosure. The embodiment of FIG. 23 may be combined with various embodiments of the present disclosure.

Referring to FIG. 23, for example, the transmitter may set an antenna pattern such that a size of a main Lobe becomes small and wide in consideration of an optimal transmit signal strength (for example, Pₜ in Equation 8). For example, it may be possible by phase shift and/or gain adjustment in an array antenna. In one example of FIG. 23, the transmitter may transmit the sensing signal with a low antenna gain, a wide beam pattern (a wide beam and/or a multi beam), and/or in the RoI direction.

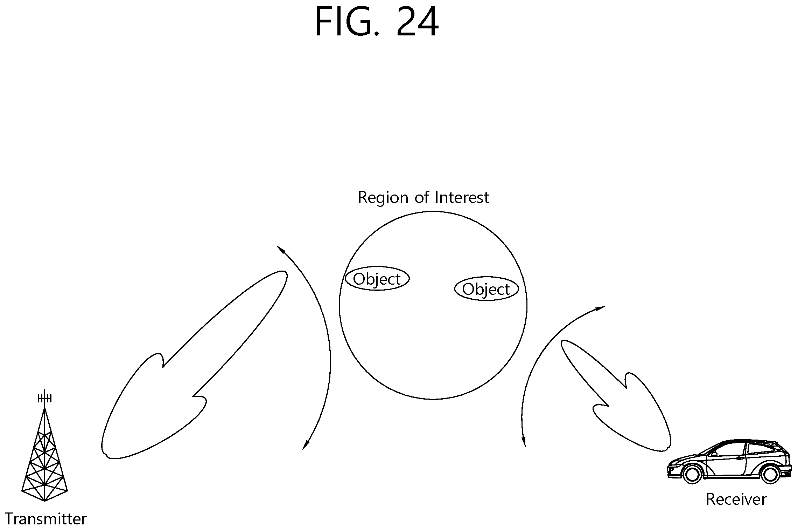

FIG. 24 illustrates a method for transmitting a sensing signal together with a beam sweeping operation with a narrow beam pattern in a RoI direction according to an embodiment of the present disclosure. The embodiment of FIG. 24 may be combined with various embodiments of the present disclosure.

Referring to FIG. 24, for example, the transmitter may transmit a signal by performing beam sweeping in the RoI direction. For example, beamforming and beam steering operations may be possible by phase shift and/or gain adjustment in an array antenna. In one example of FIG. 24, the transmitter may transmit the sensing signal while performing beam sweeping such that the RoI is covered with a high antenna gain and/or a narrow beam pattern.

For example, a direction of the transmit signal may be set by a combination of the above-mentioned operations. For example, when a size of the RoI is covered with a form of a wide beam pattern (a wide beam and/or a multi beam) and an optimal signal strength, the transmitter may transmit the signal with the wide beam pattern without performing beam sweeping. Otherwise, for example, when an intensity per transmit signal beam in a multi beam pattern does not satisfy a minimum required strength so that an overall sensing performance decreases or becomes insufficient, the transmitter may transmit the signal while performing beam sweeping with the signal strength as the optimal signal strength. That is, in the present disclosure, according to various embodiments, an efficient sensing operation is proposed through an optimal signal strength of the transmitter and direction setting and operation for covering the RoI.

In the present disclosure, according to various embodiments, signal information exchange between the transmitter and the receiver is proposed.

For example, in one example of FIG. 18, in the above-described operation of the transmitter, the transmitter may transmit to the receiver an antenna characteristic of itself (the transmitter), a pattern, RoI information, a location of the transmitter, and/or a reference signal (Reference Signal Time Difference Measurement (RSTD)). This may be for setting an antenna pattern of the receiver so that the receiver may well receive a signal reflected by an object detected in the RoI. For example, when the transmitter performs beam sweeping, the transmitter may transmit information such as beamforming change over time (for example, a beam schedule or a beam index) to the receiver so that the receiver may efficiently receive signals reflected/refracted from objects existing in the RoI.

For example, in the above-described transmitter operation, when the transmitter has location information of the receiver and/or antenna characteristic information, the transmitter may calculate an antenna pattern of the receiver so that the receiver well receives signals transmitted by the transmitter and reflected/refracted from objects existing in the RoI and may transmit the antenna pattern to the receiver.

For example, in performing bistatic sensing in ISAC technology, signals received by the receiver other than signals reflected/refracted from objects existing in the RoI as a basic operation (for example, Non-Line of Sight (NLoS)) and/or multi reflected signals may be regarded as signal noise and/or interference at the receiver. For example, it may be more difficult to distinguish between attenuated main signal reflected/refracted by an object and noise and interference signals. In the present disclosure, according to various embodiments, an operation of the receiver is proposed as follows to distinguish the main signal and noise or interference signals.

In the present disclosure, according to various embodiments, it is proposed to set an antenna gain by adjusting an antenna pattern so that the receiver can distinguish the main signal and noise by a magnitude of received signal power of a signal received by the receiver by receiving information of a transmit signal.

For example, in one example of FIG. 21, when Equation 6 is modified with reference to a range of a distance between the transmitter, the receiver, and the RoI, a range of received signal power may be derived as in Equation 10 and may be set as a threshold for distinguishing the main signal and noise. For example, the distances between the transmitter, the receiver, and the RoI may be set to minimum (R_{Rx,min}, R_{Tx,min}), and received power may be determined by adding an offset value and/or a calibration factor according to characteristics of a device and/or an environment.${P}_{r} = \frac{{G}_{t} {G}_{r} {σλ}^{2}}{{\left(4π\right)}^{3} {R}_{Tx}^{2} {R}_{Rx}^{2}} {P}_{t} + Calibration factor$

Here, Pᵣ may represent received power (W), Pₜ may represent transmit power (W), Gt may represent transmit antenna gain, Gᵣ may represent receive antenna gain, σ may represent radar cross section, λ may represent wavelength, R_{Tx} may represent a distance between a transmit radar and an object, and R_{Rx} may represent a distance between a receive radar and the object.

For example, the receiver may distinguish a main signal (a signal reflected by an object) and noise by direction setting for receiving a signal. For example, a signal received in a LoS between the RoI and the receiver may be regarded as the main signal. For example, a signal entering from another direction (NLoS) may be regarded as noise. In one example of FIG. 19, a solid line

(1901) may be regarded as the main signal, and a dotted line (1902) may be regarded as noise. In the present disclosure, according to various embodiments, a reception direction setting in which the receiver minimizes reception of noise and focuses on reception of the main signal is proposed as follows.

For example, in one example of FIG. 23, the receiver may set a main lobe of the receiver to a RoI direction, a low antenna gain, and/or a wide beam pattern (Wide beam or Multi beam) to focus on a signal (main signal) reflected by an object existing in the RoI and to minimize reception of noise directly transmitted from the transmitter.

For example, in one example of FIG. 24, the receiver may receive the sensing signal while performing beam sweeping such that the RoI is covered with a RoI direction, a high antenna gain, and/or a narrow beam pattern. When the transmitter transmits the sensing signal by performing beam sweeping, the receiver may set an antenna pattern of the receiver based on beam index information of the transmitter.

For example, the receiver may estimate existence of an object and/or Time of Flight (ToF) based on the received sensing signal, and may measure a distance/location of the object.

For example, in one example of FIG. 18, in the above-described receiver operation, the receiver may transmit to the transmitter an antenna characteristic of itself (the receiver), a pattern, RoI information, and/or a location of the receiver. This may be for setting an antenna pattern of the transmitter so that the transmitter may well transmit a signal reflected by an object detected in the RoI. Alternatively, for example, when the receiver has location information and antenna characteristic information of the transmitter, the receiver may calculate an antenna pattern of the transmitter so that the transmitter well transmits signals reflected/refracted from objects existing in the RoI and may transmit the antenna pattern to the transmitter.

In the above-described receiver operation, in the present disclosure, according to various embodiments, a report and/or feedback operation to the transmitter and/or a third device by the receiver as an operation (Post-process) after the receiver receives a signal is proposed.

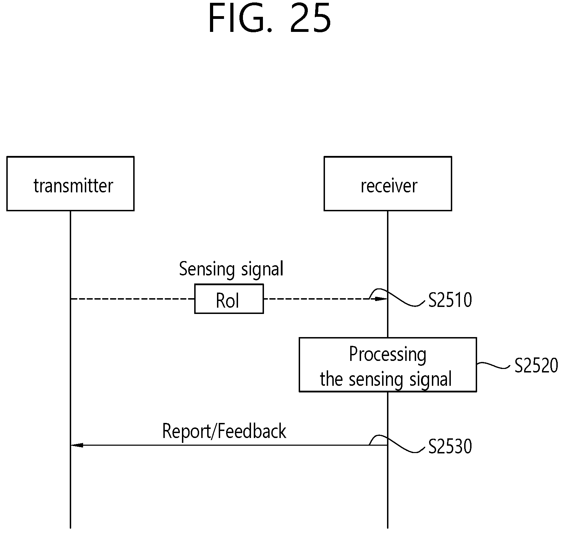

FIG. 25 illustrates a report and/or feedback operation method in which a receiver performs a report and/or feedback operation to a transmitter according to an embodiment of the present disclosure. The embodiment of FIG. 25 may be combined with various embodiments of the present disclosure.

Referring to FIG. 25, for example, in step S2510, the receiver may receive a sensing signal transmitted by the transmitter based on a target object existing within a RoI. For example, at this time, the receiver may receive the sensing signal reflected/refracted/diffracted by the target object. For example, in step S2520, the receiver may process the received sensing signal. For example, at this time, the receiver may detect the target object through the received sensing signal. For example, in step S2530, the receiver may transmit a report and/or feedback to the transmitter. For example, at this time, the report and/or the feedback may include at least one of signal confirmation, information related to a strength of the signal, raw data, a signal adjustment request, a retransmission request, signal information obtained by processing the received signal, and/or target object information. For example, the report and/or the feedback is not limited to the above-described combination and is not limited to the above-described names.

For example, when the receiver receives a signal, the receiver may transmit a signal confirmation (Acknowledge) to the transmitter as a response of a bistatic sensing operation.

For example, the receiver may report and/or feedback information related to a strength of a signal (reflected/diffracted by an object) received by the receiver to the transmitter. For example, at least one of items described below may be included as the report and/or the feedback operation. For example, the receiver may transmit raw data for the signal received by the receiver to the transmitter and/or a third device. For example, when the signal received by the receiver does not exist or is weak, the receiver may transmit a necessity of changing a transmit signal to the transmitter and/or may request a change of the transmit signal. For example, the receiver may request adjustment of the transmit signal for re-confirmation of whether the signal is not detected due to a direction error or insufficient strength of the signal transmitted by the transmitter and/or weakness of the signal reflected, refracted, and/or attenuated from the object, or whether an object actually does not exist in the RoI.

For example, when a strength of the signal received by the receiver is not sufficient and more transmit power is required, the receiver may transmit a message/feedback/report requesting the transmitter to transmit a signal with higher power because the transmit signal is weak. For example, the receiver may transmit a message/feedback/report requesting the transmitter to modify a signal direction of the transmitter and transmit the signal because the receiver does not receive a signal. For example, the receiver may transmit a message/feedback/report requesting retransmission to confirm integrity of the signal received by the receiver to the transmitter.

For example, when a strength of the signal received by the receiver is greater than necessary so that the sensing operation is possible with less transmit power, the receiver may transmit a necessity of changing the transmit signal to the transmitter and/or may request a change of the transmit signal. For example, the receiver may request adjustment of the signal to the transmitter to avoid reception of a signal reflected/refracted by an object located outside the RoI and/or to minimize interference with other signals.

For example, when the transmitter and/or the third device is a sensing information requester, the receiver may report and/or feedback received signal information or processed information. For example, the receiver may transmit signal information (for example, Angle of Arrival (AoA), Time of Flight (ToF), Time of Arrival (ToA), etc.) obtained by processing the received signal or processed object information (for example, a distance to the object, a location of the object, a shape, etc.) to the transmitter and/or the third device.

Meanwhile, in the present disclosure, according to various embodiments, an operation of a transmitter and a receiver when a sensing signal is transmitted from a single transmitter to an arbitrary receiver and/or a plurality of receivers is proposed.

In the present disclosure, according to various embodiments, an operation of a transmitter is proposed when a signal transmitted from a single transmitter is received by an arbitrary receiver and/or a plurality of receivers.

For example, in one example of FIG. 13, the transmitter may transmit a sensing signal to a RoI and transmit the signal so that an arbitrary receiver and/or a plurality of receivers receive the signal. For example, the transmitter may broadcast RoI information and may transmit the sensing signal in a RoI direction. For example, here, the transmitter may be a sensing information requester (Client) of the RoI. For example, an arbitrary receiver may be the sensing information requester (Client). For example, at this time, the transmitter may perform a signal transmission operation described above (for example, a wide beam, beam sweeping) in a beamforming scheme. For example, this may reduce throughput and/or latency of the transmitter by omitting an operation of one-to-one connection (for example, beam pairing) between the transmitter and a plurality of receivers. For example, the arbitrary receiver and/or the plurality of receivers may selectively receive only information required at an individual receiver side (that is, for example, a required RoI).

In the present disclosure, according to various embodiments, an operation of a receiver is proposed when a signal transmitted from a single transmitter is received by an arbitrary receiver and/or a plurality of receivers.

For example, the receiver may receive RoI information transmitted by the transmitter and may determine whether the RoI is valid information for the receiver. For example, the receiver may determine whether the RoI is valid information for the receiver based on a distance and/or a direction from a location of the receiver to the RoI. For example, the receiver may determine whether the RoI is valid information for the receiver based on a movement path, a planned path, and/or path estimation of the receiver.

For example, when the transmitter is a sensing information requester (for example, when a request for signal reply is indicated together with the RoI to the receiver), the receiver may determine whether the receiver may well receive a signal coming from the RoI and provide the signal to the transmitter.

For example, when the receiver determines that the RoI information transmitted by the transmitter is advantageous to the receiver and/or when the transmitter requests provision of received signal information, the receiver may perform an operation of the receiver proposed in the present disclosure (for example, signal information exchange, feedback, array antenna setting, etc.).

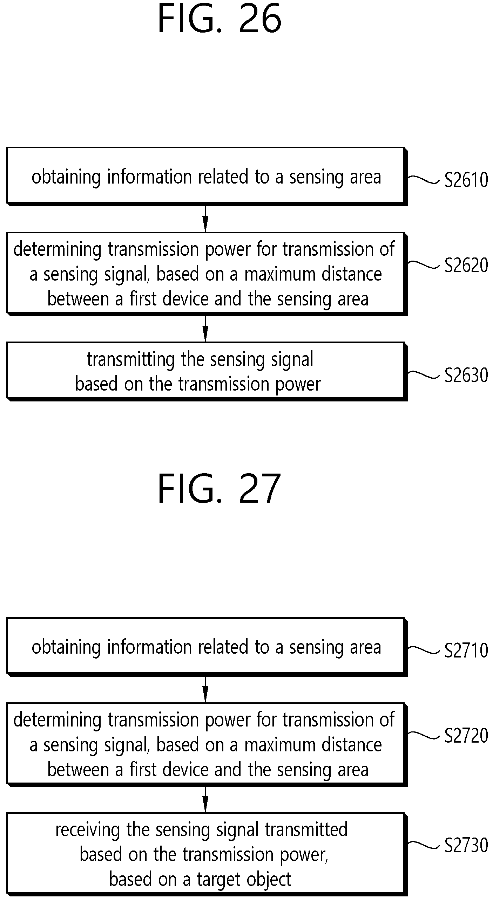

FIG. 26 illustrates a method for performing wireless communication by a first device according to an embodiment of the present disclosure. The embodiment of FIG. 26 may be combined with various embodiments of the present disclosure.

Referring to FIG. 26, in step S2610, the first device may obtain information related to a sensing area. In step S2620, the first device may determine transmission power for transmission of a sensing signal, based on a maximum distance between the first device and the sensing area. In step S2630, the first device may transmit the sensing signal based on the transmission power. For example, a target object within the sensing area may be detected based on the sensing signal.

For example, the transmission power for the transmission of the sensing signal may be a minimum required transmission power for the transmission of the sensing signal.

For example, the transmission power for the transmission of the sensing signal may be a maximum allowable transmission power for the transmission of the sensing signal.

For example, the sensing signal may be transmitted to a second device based on the target object.

For example, the transmission power may be determined based on a maximum distance between the first device and the sensing area and a maximum distance between the second device and the sensing area.

Additionally, for example, the first device may receive the sensing signal reflected by the target object.

For example, the sensing area may be determined by the first device or the second device based on at least one of information related to a location of the first device, information related to a movement path of the first device, information related to a location of the second device or information related to a movement path of the second device.

Additionally, for example, the first device may transmit, to the second device, information related to sensing. For example, the information related to the sensing may include at least one of information related to the sensing area, information related to an identifier (ID), information related to a reference signal, information related to a time synchronization signal, information related to an antenna characteristic, information related to beamforming or information related to a location of the first device.

Additionally, for example, the first device may receive information related to sensing. For example, the information related to the sensing may include at least one of information related to an identifier (ID), information related to a reference signal, information related to a time synchronization signal, information related to an antenna characteristic or information related to a location of the second device.

Additionally, for example, the first device may receive feedback information related to the sensing signal. For example, the feedback information may include at least one of information related to reception power of the second device, information related to raw data of a signal received by the second device, information related to a request for changing the transmission power, information related to a request for changing a transmission direction of the sensing signal, information related to a request for retransmission of the sensing signal, signal information obtained by processing a signal received by the second device or information related to the target object.

Additionally, for example, the first device may change an array antenna configuration of the first device based on the information related to the sensing area. For example, the array antenna configuration may include at least one of a number of arrays, a wavelength or an array spacing.

For example, a beamforming configuration for transmitting the sensing signal may be determined based on the information related to the sensing area.

For example, the method may be performed by the first device.

The proposed method may be applied to a device according to various embodiments of the present disclosure. First, the processor 102 of the first device 100 may obtain information related to a sensing area. And, the processor 102 of the first device 100 may determine transmission power for transmission of a sensing signal, based on a maximum distance between the first device and the sensing area. And, the processor 102 of the first device 100 may control the transceiver 106 to transmit the sensing signal based on the transmission power. For example, a target object within the sensing area may be detected based on the sensing signal.

According to an embodiment of the present disclosure, a first device may be provided. For example, the first device may include at least one transceiver; at least one processor; and at least one memory connected to the at least one processor and storing instructions. For example, the instructions, based on being executed by the at least one processor, may cause the first device to operations comprising: obtaining information related to a sensing area; determining transmission power for transmission of a sensing signal, based on a maximum distance between the first device and the sensing area; and transmitting the sensing signal based on the transmission power. For example, a target object within the sensing area may be detected based on the sensing signal.

According to an embodiment of the present disclosure, a processing device adapted to control a first device may be provided. For example, the processing device may include at least one processor; and at least one memory connected to the at least one processor and storing instructions. For example, the instructions, based on being executed by the at least one processor, may cause the first device to operations comprising: obtaining information related to a sensing area; determining transmission power for transmission of a sensing signal, based on a maximum distance between the first device and the sensing area; and transmitting the sensing signal based on the transmission power. For example, a target object within the sensing area may be detected based on the sensing signal.

According to an embodiment of the present disclosure, a non-transitory computer-readable storage medium storing instructions may be provided. For example, the instructions, when executed, may cause a first device to operations comprising: obtaining information related to a sensing area; determining transmission power for transmission of a sensing signal, based on a maximum distance between the first device and the sensing area; and transmitting the sensing signal based on the transmission power. For example, a target object within the sensing area may be detected based on the sensing signal.

FIG. 27 illustrates a method for performing wireless communication by a second device according to an embodiment of the present disclosure. The embodiment of FIG. 27 may be combined with various embodiments of the present disclosure.

Referring to FIG. 27, in step S2710, the second device may obtain information related to a sensing area. In step S2720, the second device may determine transmission power for transmission of a sensing signal, based on a maximum distance between a first device and the sensing area. In step S2730, the second device may receive the sensing signal transmitted based on the transmission power, based on a target object. For example, the target object within the sensing area may be detected based on the sensing signal.

The proposed method may be applied to a device according to various embodiments of the present disclosure. First, the processor 202 of the second device 200 may obtain information related to a sensing area. Then, the processor 202 of the second device 200 may determine transmission power for transmission of a sensing signal, based on a maximum distance between the first device and the sensing area. Then, the processor 202 of the second device 200 may control the transceiver 206 to receive the sensing signal transmitted based on the transmission power, based on a target object. For example, the target object within the sensing area may be detected based on the sensing signal.

According to an embodiment of the present disclosure, a second device configured to perform wireless communication may be provided. For example, the second device may include at least one transceiver; at least one processor; and at least one memory connected to the at least one processor and storing instructions. For example, the instructions, based on being executed by the at least one processor, may cause the second device to operations comprising: obtaining information related to a sensing area; determining transmission power for transmission of a sensing signal, based on a maximum distance between a first device and the sensing area; and receiving the sensing signal transmitted based on the transmission power, based on a target object. For example, the target object within the sensing area may be detected based on the sensing signal.

According to an embodiment of the present disclosure, a processing device adapted to control a second device may be provided. For example, the processing device may include at least one processor; and at least one memory connected to the at least one processor and storing instructions. For example, the instructions, based on being executed by the at least one processor, may cause the second device to operations comprising: obtaining information related to a sensing area; determining transmission power for transmission of a sensing signal, based on a maximum distance between a first device and the sensing area; and receiving the sensing signal transmitted based on the transmission power, based on a target object. For example, the target object within the sensing area may be detected based on the sensing signal.

According to an embodiment of the present disclosure, a non-transitory computer-readable storage medium storing instructions may be provided. For example, the instructions, when executed, may cause a second device to operations comprising: determining transmission power for transmission of a sensing signal, based on a maximum distance between a first device and the sensing area; and receiving the sensing signal transmitted based on the transmission power, based on a target object. For example, the target object within the sensing area may be detected based on the sensing signal.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

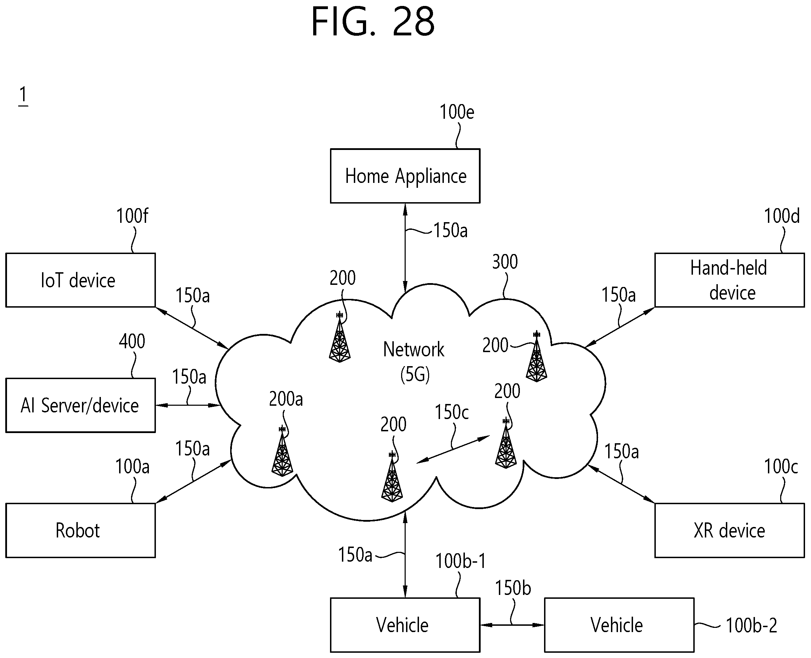

FIG. 28 shows a communication system 1, based on an embodiment of the present disclosure. The embodiment of FIG. 28 may be combined with various embodiments of the present disclosure.

Referring to FIG. 28, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

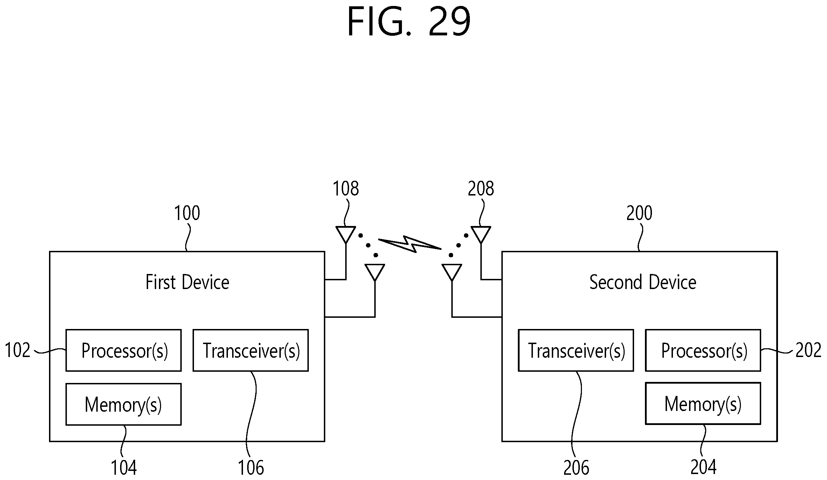

FIG. 29 shows wireless devices, based on an embodiment of the present disclosure. The embodiment of FIG. 29 may be combined with various embodiments of the present disclosure.

Referring to FIG. 29, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 28.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

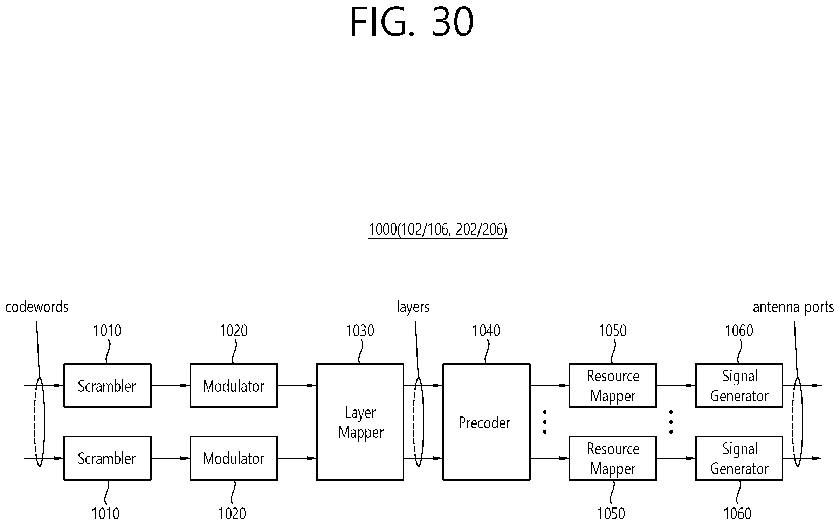

FIG. 30 shows a signal process circuit for a transmission signal, based on an embodiment of the present disclosure. The embodiment of FIG. 30 may be combined with various embodiments of the present disclosure.

Referring to FIG. 30, a signal processing circuit 1000 may include scramblers 1010, modulators 1020, a layer mapper 1030, a precoder 1040, resource mappers 1050, and signal generators 1060. An operation/function of FIG. 30 may be performed, without being limited to, the processors 102 and 202 and/or the transceivers 106 and 206 of FIG. 29. Hardware elements of FIG. 30 may be implemented by the processors 102 and 202 and/or the transceivers 106 and 206 of FIG. 29. For example, blocks 1010 to 1060 may be implemented by the processors 102 and 202 of FIG. 29. Alternatively, the blocks 1010 to 1050 may be implemented by the processors 102 and 202 of FIG. 29 and the block 1060 may be implemented by the transceivers 106 and 206 of FIG. 29.

Codewords may be converted into radio signals via the signal processing circuit 1000 of FIG. 30. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 30. For example, the wireless devices (e.g., 100 and 200 of FIG. 29) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

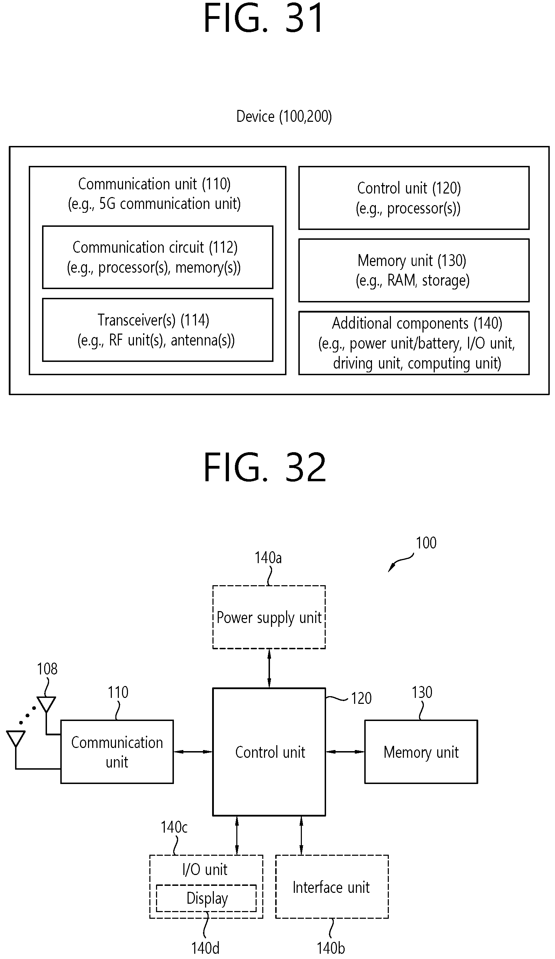

FIG. 31 shows another example of a wireless device, based on an embodiment of the present disclosure. The wireless device may be implemented in various forms according to a use-case/service (refer to FIG. 28). The embodiment of FIG. 31 may be combined with various embodiments of the present disclosure.

Referring to FIG. 31, wireless devices 100 and 200 may correspond to the wireless devices 100 and 200 of FIG. 29 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 29. For example, the transceiver(s) 114 may include the one or more transceivers 106 and 206 and/or the one or more antennas 108 and 208 of FIG. 29. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 28), the vehicles (100b-1 and 100b-2 of FIG. 28), the XR device (100c of FIG. 28), the hand-held device (100d of FIG. 28), the home appliance (100e of FIG. 28), the IoT device (100f of FIG. 28), a digital broadcast terminal, a hologram device, a public safety device, an MTC device, a medicine device, a fintech device (or a finance device), a security device, a climate/environment device, the AI server/device (400 of FIG. 28), the BSs (200 of FIG. 28), a network node, etc. The wireless device may be used in a mobile or fixed place according to a use-example/service.

In FIG. 31, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 31 will be described in detail with reference to the drawings.

FIG. 32 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 32 may be combined with various embodiments of the present disclosure.

Referring to FIG. 32, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 31, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

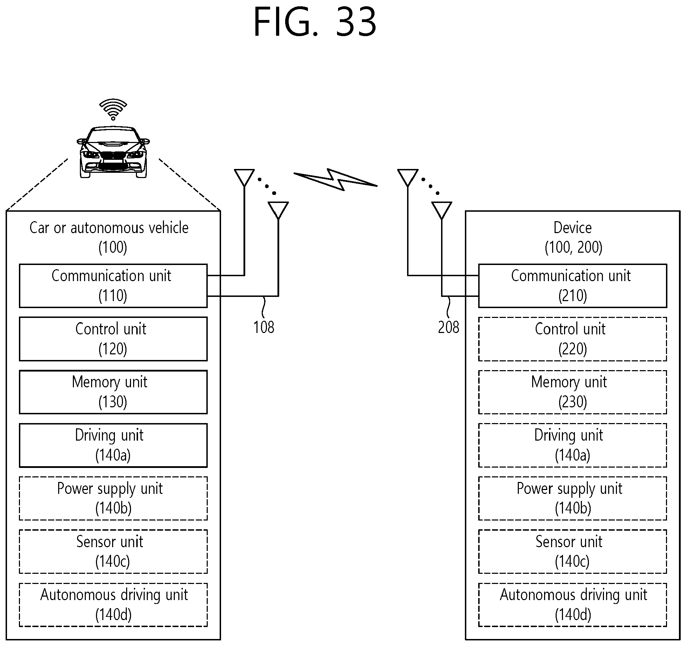

FIG. 33 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 33 may be combined with various embodiments of the present disclosure.

Referring to FIG. 33, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 31, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:
obtaining information related to a sensing area;
determining transmission power for transmission of a sensing signal, based on a maximum distance between a first device and the sensing area; and
transmitting the sensing signal based on the transmission power,
wherein a target object within the sensing area is detected based on the sensing signal.

2. The method of claim 1,
wherein the transmission power for the transmission of the sensing signal is a minimum required transmission power for the transmission of the sensing signal.

3. The method of claim 1,
wherein the transmission power for the transmission of the sensing signal is a maximum allowable transmission power for the transmission of the sensing signal.

4. The method of claim 1,
wherein the sensing signal is transmitted to a second device based on the target object.

5. The method of claim 4,
wherein the transmission power is determined based on a maximum distance between the first device and the sensing area and a maximum distance between the second device and the sensing area.

6. The method of claim 1, further comprising:
receiving the sensing signal reflected by the target object.

7. The method of claim 1,
wherein the sensing area is determined by the first device or the second device based on at least one of information related to a location of the first device, information related to a movement path of the first device, information related to a location of the second device or information related to a movement path of the second device.

8. The method of claim 1, further comprising:
transmitting, to a second device, information related to sensing,
wherein the information related to the sensing includes at least one of information related to the sensing area, information related to an identifier (ID), information related to a reference signal, information related to a time synchronization signal, information related to an antenna characteristic, information related to beamforming or information related to a location of the first device.

9. The method of claim 1, further comprising:
receiving information related to sensing,
wherein the information related to the sensing includes at least one of information related to an identifier (ID), information related to a reference signal, information related to a time synchronization signal, information related to an antenna characteristic or information related to a location of a second device.

10. The method of claim 1, further comprising:
receiving feedback information related to the sensing signal,
wherein the feedback information includes at least one of information related to a reception power of a second device, information related to raw data of a signal received by the second device, information related to a request for changing the transmission power, information related to a request for changing a transmission direction of the sensing signal, information related to a request for retransmission of the sensing signal, signal information obtained by processing a signal received by the second device or information related to the target object.

11. The method of claim 1, further comprising:
changing an array antenna configuration of the first device based on the information related to the sensing area,
wherein the array antenna configuration includes at least one of a number of arrays, a wavelength or an array spacing.

12. The method of claim 1,
wherein a beamforming configuration for transmitting the sensing signal is determined based on the information related to the sensing area.

13. The method of claim 1,
wherein the method is performed by the first device.

14. A first device comprising:
at least one transceiver;
at least one processor; and
at least one memory connected to the at least one processor and storing instructions that, the instructions based on being executed by the at least one processor, cause the first device to operations comprising:
obtaining information related to a sensing area;
determining transmission power for transmission of a sensing signal, based on a maximum distance between the first device and the sensing area; and
transmitting the sensing signal based on the transmission power,
wherein a target object within the sensing area is detected based on the sensing signal.

15. A processing device adapted to control a first device, comprising:
at least one processor; and
at least one memory connected to the at least one processor and storing instructions that, the instructions based on being executed by the at least one processor, cause the first device to operations comprising:
obtaining information related to a sensing area;
determining transmission power for transmission of a sensing signal, based on a maximum distance between the first device and the sensing area; and
transmitting the sensing signal based on the transmission power,
wherein a target object within the sensing area is detected based on the sensing signal.

16. A non-transitory computer-readable storage medium storing instructions, the instructions, when executed, cause a first device to perform operations comprising:
obtaining information related to a sensing area;
determining transmission power for transmission of a sensing signal, based on a maximum distance between the first device and the sensing area; and
transmitting the sensing signal based on the transmission power,
wherein a target object within the sensing area is detected based on the sensing signal.

17. A method comprising:
obtaining information related to a sensing area;
determining transmission power for transmission of a sensing signal, based on a maximum distance between a first device and the sensing area; and
receiving the sensing signal transmitted based on the transmission power, based on a target object,
wherein the target object within the sensing area is detected based on the sensing signal.

18. A second device comprising:
at least one transceiver;
at least one processor; and
at least one memory connected to the at least one processor and storing instructions that, the instructions based on being executed by the at least one processor, cause the first device to operations comprising:
obtaining information related to a sensing area;
determining transmission power for transmission of a sensing signal, based on a maximum distance between a first device and the sensing area; and
receiving the sensing signal transmitted based on the transmission power, based on a target object,
wherein the target object within the sensing area is detected based on the sensing signal.

19. A processing device adapted to control a second device, comprising:
at least one processor; and
at least one memory connected to the at least one processor and storing instructions that, the instructions based on being executed by the at least one processor, cause the second device to operations comprising:
obtaining information related to a sensing area;
determining transmission power for transmission of a sensing signal, based on a maximum distance between a first device and the sensing area; and
receiving the sensing signal transmitted based on the transmission power, based on a target object,
wherein the target object within the sensing area is detected based on the sensing signal.

20. A non-transitory computer-readable storage medium storing instructions, the instructions, when executed, cause a second device to perform operations comprising:
obtaining information related to a sensing area;
determining transmission power for transmission of a sensing signal, based on a maximum distance between a first device and the sensing area; and
receiving the sensing signal transmitted based on the transmission power, based on a target object,
wherein the target object within the sensing area is detected based on the sensing signal.
